(19) Europäisches Patentamt
European Patent Office
Office européen des brevets

(11) **EP 3 116 094 A1**

(12) **EUROPEAN PATENT APPLICATION**

(43) Date of publication:
**11.01.2017 Bulletin 2017/02**

(51) Int Cl.:
*H02J 7/02* (2016.01)  *H02J 50/10* (2016.01)
*H02J 50/40* (2016.01)  *H02J 50/80* (2016.01)

(21) Application number: **16178894.8**

(22) Date of filing: **11.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.07.2015 JP 2015138133**

(71) Applicant: **Funai Electric Co., Ltd.**
**Daito**
**Osaka 574-0013 (JP)**

(72) Inventor: **NAKASE, Takafumi**
**Daito, Osaka 574-0013 (JP)**

(74) Representative: **Osha Liang**
**2, rue de la Paix**
**75002 Paris (FR)**

(54) **POWER SUPPLY APPARATUS**

(57) A power supply apparatus (1a) includes a power supply antenna (14) configured to supplypower from a power source (11) to a power receiving apparatus (2), a controller (17) configured to acquire a first value relating to charging information of the power receiving apparatus (2) from the power supply apparatus (1a), acquire a second value relating to charging information of the power receiving apparatus (2) from a further power supply apparatus (1b), compare the first value to the second value, and cause the power supply apparatus (1a) to supply power to the power receiving apparatus (2) based on the comparison of the first value to the second value.

FIG. 2

EP 3 116 094 A1

**Description**

[Technical Field]

The present invention generally relates to a power supply apparatus, and particularly relates to a power supply apparatus for supplying power from a power supply antenna to a power receiving apparatus.

[Background]

Conventional power supply apparatuses supply power from a power supply antenna to a power receiving apparatus (for example, see Patent Literature 1).

A power transmitting apparatus (power supply apparatus) of Patent Literature 1 comprises a power transmitter (power supply antenna) for supplying power to an external power receiving apparatus without contact. In the power transmitting apparatus, the power transmitter varies a magnetic field by a variation method different from another adjacent power transmitting apparatus. Thereby, the power transmitting apparatus suppresses the occurrence of interference between adjacent power transmitting apparatus.

[Citation List]

[Patent Literature]

[Patent Literature 1] Japanese Patent Application Publication No. 2012-29471

However, in the power receiving apparatus according to the aforementioned Patent Literature 1, a complicated apparatus configuration is required to vary the magnetic field.

[Summary of the Invention]

A power supply apparatus according to one or more embodiments of the present invention can suppress the occurrence of interference between different power supply apparatus and simplifies the apparatus configuration.

A power supply apparatus according to one or more embodiments of the present invention comprises: a power supply antenna configured to supply power from a power source to a power receiving apparatus, and a controller configured to carry out power supply control to the power supply antenna. The controller may be configured to acquire a first value relating to charging information of the power receiving apparatus from the power supply apparatus, acquire a second value relating to charging information of the power receiving apparatus from another power supply apparatus, and cause the power supply apparatus to supply power to the power receiving apparatus based on the comparison of the first value to the second value.

The power source may be external to the apparatus or may comprise a battery included in the apparatus.

According to one or more embodiments of the present invention, the first value indicates a first power supply efficiency from the power supply apparatus to the power receiving apparatus, and the second value indicates a second power supply efficiency from the other power supply apparatus to the power receiving apparatus.

According to one or more embodiments, the controller may be configured to stop the power supply after the first value relating to charging information is acquired and to resume the power supply when the first value is larger than the second value. Thereby, , the occurrence of interference between the two power supply apparatus may be suppressed. In addition, since it is not necessary to vary the magnetic field in order to suppress the occurrence of interference between the two power supply apparatus, it is possible to simplify the apparatus configuration. Therefore, it is possible to suppress the occurrence of interference between the two power supply apparatus while simplifying the apparatus configuration. In addition, when the first value is larger than the second value, the controller may be configured to resume the power supply. Thus, since the power supply is resumed in the power receiving apparatus when the power supply efficiency of the power supply apparatus (the equipment itself) is larger than the power supply efficiency of the other power supply apparatus, an efficient power supply can easily be carried out in the power receiving apparatus. As a result, it can be controlled so that the charging time of the power receiving apparatus is lengthened.

According to one or more embodiments of the present invention, the controller may be configured not to resume the power supply when the first value is less than or equal to the second value. According to such a configuration, since the power supply can be stopped, the power can easily be supplied to the power receiving apparatus from the other power supply apparatus in which the second value relating to charging information, which may indicate the power supply efficiency, is greater than or equal to the first value, while suppressing the occurrence of interference between the power supply apparatus. As a result, an efficient power supply can more easily be carried out to the power receiving apparatus. In this case, the controller is configured to carry out control for notifying of the first value for the other power supply apparatus. According to such a configuration, even in the other power supply apparatus, it is possible to determine the values (first value and second value) relating to charging information, for example indicating the power supply efficiency. As a result, while suppressing the occurrence of interference between the power supply apparatus, since any one of the first value or second value can supply power to the power receiving apparatus from a large power supply apparatus, it is possible to reliably supply power efficiently to the power receiving apparatus.

According to one or more embodiments of the present invention, the controller is configured to resume the power supply when the second value cannot be acquired within a predetermined time. According to such a configuration, unlike a power supply being in a stopped state until the second value is acquired, a power supply stopped at a timing in which a predetermined amount of time has elapsed can be resumed. As a result, when the second value cannot be acquired from the other power supply apparatus, it is possible to suppress the occurrence of a case in which power is not supplied to the power receiving apparatus.

According to one or more embodiments of the present invention, the power supply antenna is configured to transmit an output signal to detect the power receiving apparatus, and the controller is configured to acquire the first value and the second value when the power receiving apparatus is detected by the output signal from the power supply antenna, and to determine whether or not the first value is larger than the second value. According to such a configuration, the power receiving apparatus is detected by the output signal from the power supply antenna, and it is possible to determine whether or not the first value is larger than the second value at a timing in which the power supply resumes. As a result, an efficient power supply to the power receiving apparatus can be carried out from the timing in which the power supply resumes.

According to one or more embodiments of the present invention, the controller is configured to acquire the first value and the second value when the first value is small during resuming the power supply, and to determine whether or not the first value is larger than the second value. According to such a configuration, during resuming the power supply resume, even when the first value is small due to a change in the position of the power receiving apparatus, it is possible to re-determine whether or not the first value is larger than the second value. As a result, efficient power supply to the power receiving apparatus can be carried out even more easily. In this case, the controller is configured to acquire the first value and the second value when the first value is smaller than a predetermined threshold value during resuming the power supply, and to determine whether or not the first value is larger than the second value. According to such a configuration, compared to when determining whether or not the first value is larger than the second value whenever the first value is small, an efficient power supply to the power receiving apparatus can be easily carried out while simplifying the process in the controller.

According to one or more embodiments of the present invention, the controller is configured to acquire the first value and the second value at a predetermined time interval during resuming the power supply, and to determine whether or not the first value is larger than the second value. According to such a configuration, since it is possible to regularly determine whether or not the first value is larger than the second value during power supply resume, even when the power supply environment varies, efficient power supply to the power receiving apparatus can be carried out.

According to one or more embodiments of the present invention, the power supply apparatus further includes a detector for detecting whether the other power supply apparatus is supplying power to the power receiving apparatus, and the controller is configured to carry out power supply when it has not been detected by the detector that the other power supply apparatus is supplying power to the power receiving apparatus. According to such a configuration, when supplying power to the power receiving apparatus from the other power supply apparatus, since power is not supplied to the power receiving apparatus from the equipment itself, it is possible to reliably suppress the occurrence of interference between the power supply apparatus. In addition, in order to suppress the occurrence of interference between the power supply apparatus, since it is not necessary for it to be configured to vary the magnetic field, it is possible to reliably suppress the occurrence of interference between the power supply apparatus while simplifying the apparatus configuration.

According to one or more embodiments of the present invention, a power supply apparatus may comprise a power supply antenna that supplies power from a power source to a power receiving apparatus, a controller that acquires a first value relating to charging information of the power receiving apparatus from the power supply apparatus, acquires a second value relating to charging information of the power receiving apparatus from another power supply apparatus, compares the first value to the second value, and causes the power supply apparatus to supply power to the power receiving apparatus based on the comparison of the first value to the second value.

According to one or more embodiments, a power supply apparatus comprises: a power supply antenna configured to supply power from a power source to a power receiving apparatus; and a controller configured to:

acquire a first value relating to charging information of the power receiving apparatus from the power supply apparatus,

acquire a second value relating to charging information of the power receiving apparatus from a further power supply apparatus,
compare the first value to the second value, and
cause the power supply apparatus to supply power to the power receiving apparatus based on the comparison of the first value to the second value,

wherein the controller is configured to cause the power supply apparatus to stop supplying power to the power receiving apparatus when the controller acquires the first value.

According to one or more embodiments, the controller, which may be for example configured as defined in the previous paragraph, may be further configured to acquire: a third value relating to power supply efficiency from the power supply apparatus to the power receiving apparatus during resumed power supply, and a fourth value relating to power supply efficiency from a still further power supply apparatus to the power receiving apparatus.

According to one or more embodiments, the controller may be configured to determine whether the above-mentioned third value is larger than the fourth value based on the third value being not equal to the first value, and the controller may be configured to cause the power supply apparatus to resume supplying power to the power receiving apparatus based on the third value being larger than the fourth value.

According to one or more embodiments, the controller may be configured to determine whether the third value is larger than the fourth value based on the third value being smaller than the first value.

According to one or more embodiments, the controller may be configured to determine whether the third value is larger than the fourth value based on the third value being smaller than a predetermined threshold value.

Further embodiments of the power supply apparatus are defined in the dependent claims.

According to one or more embodiments of the present invention, a power supply apparatus can suppress the occurrence of interference between power supply apparatus while simplifying the apparatus configuration.

According to one or more embodiments of the present invention, a power supply method for supplying power to a power receiving apparatus may comprise acquiring, with a first power supply apparatus, a first power supply efficiency from the first power supply apparatus to the power receiving apparatus, acquiring a second power supply efficiency from a second power supply apparatus to the power receiving apparatus, and supplying, with the first power supply apparatus, power to the power receiving apparatus when the first power supply efficiency is higher than the second power supply efficiency.

According to one or more embodiments the method further comprises detecting, with the first power supply apparatus, the second power supply apparatus that supplies power to the power receiving apparatus, wherein supplying power is performed when the second power supply apparatus is not detected.

According to one or more embodiments, a power supply system comprises a power supply apparatus as defined in any of the above-mentioned embodiments or in the claims. The power supply system further comprises the further power supply apparatus (or a plurality of further power supply apparatus) and the power receiving apparatus.

[Brief Description of Drawings]

FIG. 1 is a diagram illustrating the power supply system according to one or more embodiments of a first example of the present invention.
FIG. 2 is a block diagram illustrating the power supply apparatus and power receiving apparatus according to one or more embodiments of first through fourth examples of the present invention.
FIG. 3 is a sequence diagram for describing a case where the power supply efficiency A is larger than the power supply efficiency B in the power supply determination process of the power supply system according to one or more embodiments of the first example of the present invention.
FIG. 4 is a sequence diagram for describing a case where the power supply efficiency A is less than or equal to the power supply efficiency B in the power supply determination process of the power supply system according to one or more embodiments of the first example of the present invention.
FIG. 5 is a sequence diagram for describing a case where another power supply apparatus is not active in the power supply determination process of the power supply system according to one or more embodiments of the first example of the present invention.
FIG. 6 is a flowchart for describing the power supply determination process of the power supply system according to one or more embodiments of the first example of the present invention.
FIG. 7 is a flowchart that follows the flowchart illustrated in FIGs. 6, 9, 11, and 12.
FIG. 8 is a diagram for describing a case where the power supply apparatus is moved in the power supply system according to one or more embodiments of the second example of the present invention.
FIG. 9 is a flowchart for describing the power supply determination process of the power supply system according to one or more embodiments of the second example of the present invention.

FIG. 10 is a diagram for describing a case where the power receiving apparatus is moved in the power supply system according to one or more embodiments of the third example of the present invention.

FIG. 11 is a flowchart for describing the power supply determination process of the power supply system according to one or more embodiments of the third example of the present invention.

FIG. 12 is a flowchart for describing the power supply determination process of the power supply system according to one or more embodiments of the fourth example of the present invention.

[Detailed Description of Embodiments]

Embodiments embodying the present invention will be described below based on drawings.

(First Example)

(Configuration of Power Supply System)

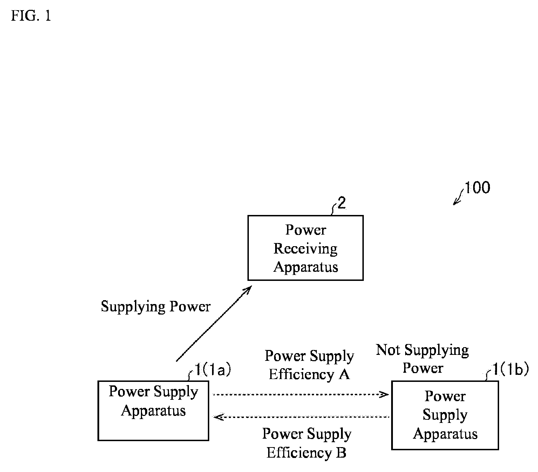

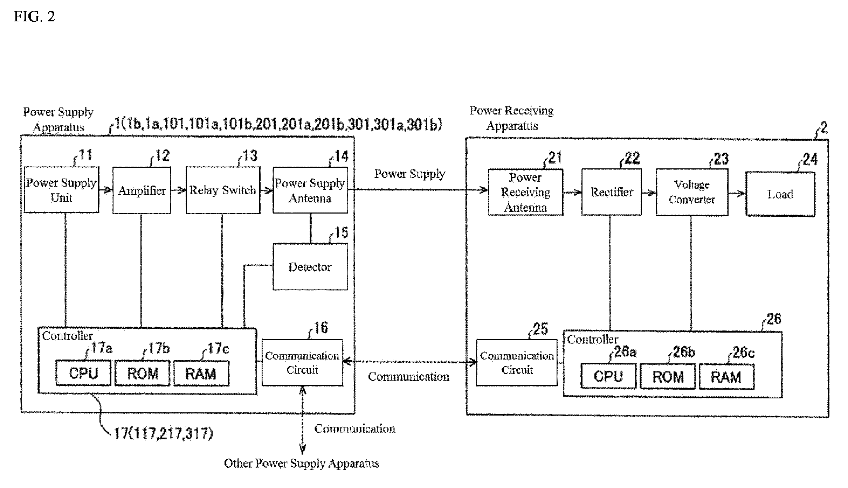

First, a configuration of the power supply system 100 according to the first example of the present invention will be described with reference to FIG. 1 and FIG. 2.

The power supply system 100 according to the first example of the present invention, as illustrated in FIG. 1, includes a plurality (two) of a power supply apparatus 1 (1a and 1b), and a power receiving apparatus 2. The power supply system 100, for example, is a non-contact method power supply system for providing power (supplying power) to the power receiving apparatus 2 from the power supply apparatus 1 without electrical contact of a connector or the like, by a magnetic field resonance method. In addition, in the power supply system 100, the plurality of power supply apparatus 1 are disposed in a position adjacent to each other. In addition, in the power supply system 100, an electronic device such as a tablet or a smart phone, for example, can be used as the power receiving apparatus 2.

(Configuration of Power Supply Apparatus)

As illustrated in FIG. 2, the power supply apparatus 1 includes a power source 11, an amplifier 12, a relay switch 13, a power supply antenna 14, a detector 15, a communication circuit 16, and a controller 17. The power supply apparatus 1a and 1b are described as the power supply apparatus 1 here since both may have substantially similar configuration. The detector 15 is one example of a "detector" in the present invention.

The power source 11 is configured to provide power from a commercial power source (not shown) outside of the apparatus or a battery (not shown) inside of the apparatus or the like, to the power supply antenna 14 via the amplifier 12 and the relay switch 13. In addition, the power source 11 includes a DC/DC converter, and is configured to convert power from a commercial power source (not shown) outside of the apparatus or a battery (not shown) inside of the apparatus or the like, to a predetermined voltage value based on the control of the controller 17.

The amplifier 12 is configured to amplify power from the power source 11 and output it to the relay switch 13.

The relay switch 13 is configured to provide AC power having a predetermined frequency to the power supply antenna 14 by switching at a predetermined frequency based on the control of the controller 17.

The power supply antenna 14 includes a resonant circuit having an antenna coil and a capacitor, and is configured to resonate at the predetermined frequency of the AC power from the relay switch 13. Thus, the power supply antenna 14 is configured to generate a magnetic field for carrying out power supply without electrical contact (with non-contact) to the power receiving apparatus 2. As a result, the power supply antenna 14 is configured to be able to supply power from the power source 11 without electrical contact to the power receiving apparatus 2. In addition, the power supply antenna 14 is configured to transmit an output signal (beacon) for detecting the power receiving apparatus 2.

The detector 15 is configured to detect that another power supply apparatus 1 is supplying power to the power receiving apparatus 2. Specifically, when a magnetic field is generated from the power supply antenna 14 of the other power supply apparatus 1 (1b for 1a or 1a for 1b), power receiving is carried out by the power supply antenna 14 of the equipment itself. By detecting power when power is being received, the detector 15 is configured to detect that the other power supply apparatus 1 is supplying power to the power receiving apparatus 2.

The communication circuit 16 is configured to be able to wirelessly communicate with the power receiving apparatus 2 and the other power supply apparatus 1 based on a predetermined wireless communication standard (for example, Bluetooth (registered trademark) standard). The controller 17 acquires information such as received power information including (charging information) a received power value of the power receiving apparatus 2 from the power receiving apparatus 2, via the communication circuit 16. In addition, the controller 17 is configured to acquire a received power value from the amplifier 12. Thereby, the power supply efficiency shown by the following equation (1) can be acquired by the controller 17.

$$\text{Power supply efficiency} = \text{Received power value} / \text{supplied power value} \quad (1)$$

The controller 17 includes a CPU 17a for controlling the operation of the power supply apparatus 1, a ROM 17b for storing each type of program and the like for operating the power supply apparatus 1, and a RAM 17c used as the operational area when operating a program. The control of the power supply by the controller 17 will be described in detail later.

(Configuration of Power Receiving Apparatus)

As illustrated in FIG. 2, the power receiving apparatus 2 includes a power receiving antenna 21, a rectifier 22, a voltage converter 23, a load 24, a communication circuit 25, and a controller 26.
The power receiving antenna 21 includes a resonant circuit having an antenna coil and a capacitor, and is configured to generate AC power (receive power) by the resonant circuit resonating due to the power supply antenna 14 of the power supply apparatus 1.
The rectifier 22 is configured to rectify AC power generated in the power receiving antenna 21 to DC power.
The voltage converter 23 is configured to convert power (DC power) rectified by the rectifier 22 to a predetermined voltage value based on control of the controller 26. In addition, the voltage converter 23 is configured to provide DC power converted to a predetermined voltage value to the load 24.
The load 24 is configured by, for example, a secondary battery and is configured to be charged by being provided with DC power from the voltage converter 23. The load 24 may be configured by a predetermined circuit or the like that operates by being provided power from the voltage converter 23, other than the secondary battery.
The communication circuit 25 is configured to be able to wirelessly communicate with the power supply apparatus 1 based on a predetermined wireless communication standard (for example, Bluetooth standard). The power receiving apparatus 2 is configured to send received power information and the like, including a received power value, to the power supply apparatus 1 via the communication circuit 25.
The controller 26 includes a CPU 26a for controlling the operation of the power receiving apparatus 2, a ROM 26b for storing each type of program and the like for operating the power receiving apparatus 2, and a RAM 26c used as the operational area when operating a program.

(Configuration Relating to Power Supply Operation)

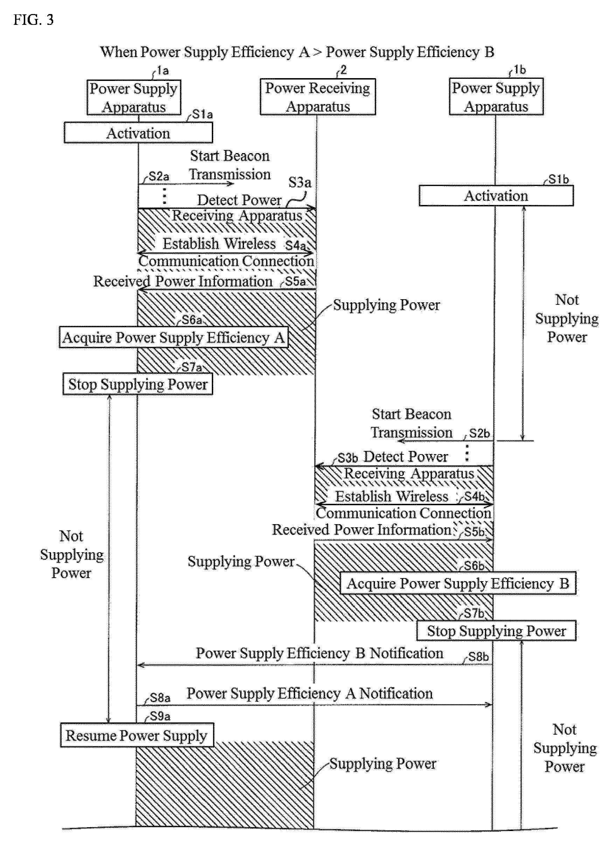

Next, the configuration relating to the power supply operation of the power supply apparatus 1 will be described.
First, as illustrated in FIG. 3 through FIG. 6, the controller 17 of the power supply apparatus 1 is configured to determine whether or not it has been detected by the detector 15 that the adjacent other power supply apparatus 1 is supplying power to the power receiving apparatus 2.
Then, when it is determined that it has not been detected by the detector 15 that the other power supply apparatus 1 is supplying power to the power receiving apparatus 2, the controller 17 is configured to carry out control for transmitting a beacon from the power supply antenna 14 for detecting the power receiving apparatus 2. Thereafter, when the power receiving apparatus 2 is detected by the beacon from the power supply antenna 14, the controller 17 is configured to start supplying power to the power receiving apparatus 2 from the power supply antenna 14, by providing a larger power than the beacon to the power supply antenna 14 from the power source 11.
On the other hand, when it is determined that it has been detected by the detector 15 that the other power supply apparatus 1 is supplying power to the power receiving apparatus 2, the controller 17 is configured not to carry out a power supply to the power receiving apparatus 2 by not providing power to the power supply antenna 14 from the power source 11. At this time, the beacon is also not transmitted. As a result, since the adjacent power supply apparatus 1 (1a and 1b) do not simultaneously carry out the power supply, it is possible to suppress the occurrence of interference between adjacent power supply apparatus 1.
Here, in the first example, as illustrated in FIG. 3 through FIG. 6, the power receiving apparatus 2 is detected by a beacon from the power supply antenna 14, and when the power supply is started to the power supply antenna 14, the controller 17 is configured to acquire the power supply efficiency for the power receiving apparatus 2 from the equipment itself during the started power supply. In addition, after acquiring the power supply efficiency of the equipment itself, the controller 17 stops the power supply to the power supply antenna 14, and is configured to acquire the power supply efficiency for the power receiving apparatus 2 from the other power supply apparatus 1 (1b for 1a or 1a for 1b) via the communication circuit 16 while the power supply is stopped. The power supply efficiency regarding the power receiving apparatus 2 from the equipment itself and the power supply efficiency for the power receiving apparatus 2 from the other power supply apparatus 1 are respectively examples of the "first value" and the "second value" of the present invention.

Then, in the first example, the controller 17 is configured to determine whether or not the power supply efficiency of the equipment itself is larger than the power supply efficiency of the other power supply apparatus 1 based on the acquired power supply efficiency of the equipment itself and the power supply efficiency of the other power supply equipment 1.

The controller 17 is configured to carry out control for resuming a stopped power supply and to carry out control for notifying of the power supply efficiency of the equipment itself regarding the other power supply apparatus 1 when the power supply efficiency of the equipment itself is larger than the power supply efficiency of the other power supply apparatus 1.

In addition, the controller 17 is configured to carry out control of not resuming the stopped power supply when the power supply efficiency of the equipment itself is less than or equal to the power supply efficiency of the other power supply apparatus 1.

In addition, the controller 17, in addition to a case where it determines when the power supply efficiency of the equipment itself is larger than the power supply efficiency of the other power supply apparatus 1, is also configured to resume a stopped power supply when it is not able to acquire the power supply efficiency of the other power supply apparatus 1 within a predetermined amount of time (for example, within several seconds) while the power supply is stopped.

The power supply operation described above will be described below based on the sequence diagram with reference to FIG. 3 through FIG. 5. Here, a case in which the power supply apparatus 1b is activated (power source is ON) after the power supply apparatus 1a will be described. The operation of the power supply apparatus 1a is controlled by the controller 17 of the power supply apparatus 1a, and the operation of the power supply apparatus 1b is controlled by the controller 17 of the power supply apparatus 1b. In addition, in FIG. 3 through FIG. 5, for ease of understanding, the process of the power supply apparatus 1a will be denoted by "a" and the process of the power supply apparatus 1b will be denoted by "b".

(Operation when Power Supply Efficiency A > Power Supply Efficiency B)

In this case, first, a case where the power supply efficiency A of the power supply apparatus 1a is larger than the power supply efficiency B of the power supply apparatus 1b (power supply efficiency A > power supply efficiency B) will be described with reference to FIG. 3.

First, in step S1a, when the power supply apparatus 1a is activated, it is determined whether or not it has been detected by the detector 15 of the power supply apparatus 1a that the adjacent other power supply apparatus 1b is supplying power to power receiving apparatus 2.

In the case illustrated in FIG. 3, since the other power supply apparatus 1b is not supplying power to the power receiving apparatus 2, it is determined that it has not been detected by the detector 15 of the power supply apparatus 1a that the other power supply apparatus 1b is supplying power to the power receiving apparatus 2, and in step S2a, a beacon is transmitted from the power supply antenna 14 of the power supply apparatus 1a.

Then, in step S3a, when the power receiving apparatus 2 is detected by the beacon from the power supply antenna 14, power supply is started to the power receiving apparatus 2 from the power supply antenna 14 of the power supply apparatus 1a. In FIG. 3 through FIG. 5, for ease of understanding, the section in which power is being supplied is illustrated by hatching.

Then, in step S4a, by carrying out communication based on a predetermined wireless communication standard between the power supply apparatus 1a and the power receiving apparatus 2, a wireless communication connection between the power supply apparatus 1a and the power receiving apparatus 2 is established.

Then, in step S5a, received power information including a received power value for the power supply apparatus 1a is sent from the power receiving apparatus 2. As a result, a received power value for the power supply apparatus 1a is acquired and in step S6a, the power supply efficiency A of the power supply apparatus 1a is acquired by the aforementioned equation (1).

Thereafter, in step S7a, power supply from the power supply apparatus 1a is stopped.

On the other hand, in step S1b, when the power supply apparatus 1b is started after the power supply apparatus 1a, it is determined whether or not it has been detected by the detector 15 of the power supply apparatus 1b that the adjacent other power supply apparatus 1a is supplying power to the power receiving apparatus 2.

In the case illustrated in FIG. 3, since the other power supply apparatus 1a is supplying power to the power receiving apparatus 2, it is determined that it has been detected by the detector 15 of the power supply apparatus 1b that the other power supply apparatus 1a is supplying power to the power receiving apparatus 2, a beacon is not transmitted, and the power supply is not started.

Then, in step S7a, when the power supply of the other power supply apparatus 1a is stopped, since the other power supply apparatus 1a is no longer supplying power to the power receiving apparatus 2, it is determined that it is not being detected by the detector 15 of the power supply apparatus 1b that the other power supply apparatus 1a is supplying power to the power receiving apparatus 2, and in step S2b, a beacon is transmitted from the power supply antenna 14 of the power supply apparatus 1b.

Thereafter, in step S3b, when the power receiving apparatus 2 is detected by the beacon from the power supply antenna 14, power supply is started to the power receiving apparatus 2 from the power supply antenna 14 of the power supply apparatus 1b.

Then, in step S4b, by carrying out communication based on a predetermined wireless communication standard between the power supply apparatus 1b and the power receiving apparatus 2, a wireless communication connection is established.

Then, in step S5b, received power information including a received power value for the power supply apparatus 1b is sent from the power receiving apparatus 2. As a result, a received power value is acquired in the power supply apparatus 1b, and in step S6b the power supply efficiency B of the power supply apparatus 1b is acquired using the aforementioned equation (1).

Thereafter, in step S7b, power supply of the power supply apparatus 1b is stopped, and in step S8b, the power supply efficiency B is notified (sent) from the power supply apparatus 1b to the power supply apparatus 1a.

Then, in the power supply apparatus 1a, it is determined whether or not the power supply efficiency A of the equipment itself (power supply apparatus 1a) is larger than the power supply efficiency B of the other power supply apparatus 1b.

In the case illustrated in FIG. 3, it is determined that the power supply efficiency A of the equipment itself (power supply apparatus 1a) is larger than the power supply efficiency B of the other power supply apparatus 1b, and in step S8a, after the power supply efficiency A is notified (sent) from the power supply apparatus 1a to the power supply apparatus 1b, in step S9a, the power supply that was stopped in step S7a is resumed.

On the other hand, in the power supply apparatus 1b, it is determined that the power supply efficiency B of the equipment itself (power supply apparatus 1b) is less than or equal to the power supply efficiency A of the other power supply apparatus 1a, based on the power supply efficiency A of the other power supply apparatus 1a and the power supply efficiency B of the equipment itself (power supply apparatus 1b) acquired by the process of step S8b. As a result, the power supply stopped in step S7b is not resumed and the power supply remains stopped.

(Operation when Power Supply Efficiency A ≤ Power Supply Efficiency B)

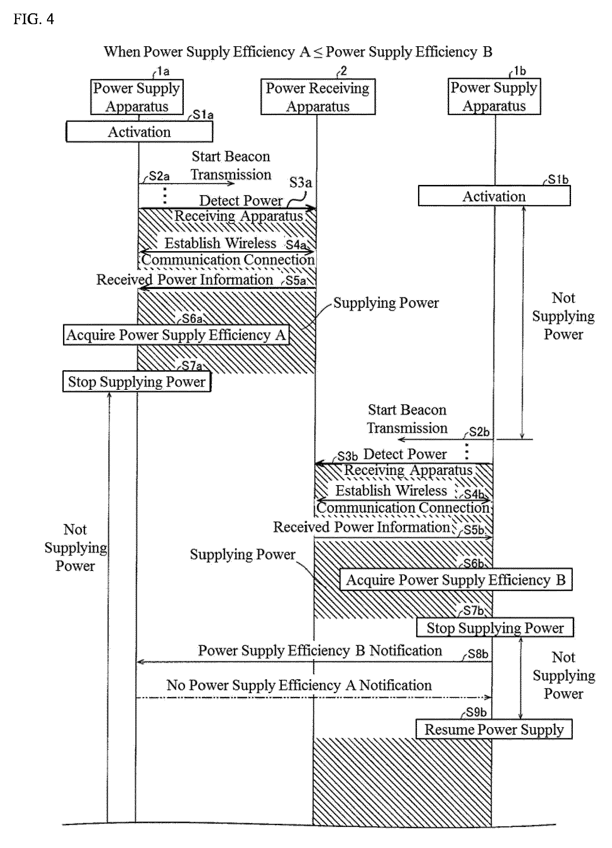

Next, a case where the power supply efficiency A of the power supply apparatus 1a is less than or equal to the power supply efficiency B of the power supply apparatus 1b (power supply efficiency A ≤ power supply efficiency B) will be described with reference to FIG. 4. The same process as the process of FIG. 3 will be denoted by the same reference numerals, and a description thereof will be omitted.

In this case, first, in step S1a to step S7a, the same process as illustrated in FIG. 3 is carried out by the power supply apparatus 1a. In addition, in step S1b to step S8b, the same process as illustrated in FIG. 3 is carried out by the power supply apparatus 1b.

In the case illustrated in FIG. 4, in the power supply apparatus 1a, it is determined that the power supply efficiency A of the equipment itself (power supply apparatus 1a) is less than or equal to the power supply efficiency B of the other power supply apparatus 1b. As a result, unlike the case illustrated in FIG. 3, the power supply stopped in step S7a is not resumed, and the power supply remains stopped. In this case, the power supply efficiency A is not notified to the power supply apparatus 1b from the power supply apparatus 1a.

On the other hand, in the power supply apparatus 1b, it is determined that the power supply efficiency A of the other power supply apparatus 1a cannot be acquired in a predetermined time while the power supply is stopped at a timing in which a predetermined time has elapsed from the stopping process of the power supply in step S7b. As a result, in step S9b, the stopped power supply is resumed. In FIG. 4, for convenience of illustration, the predetermined amount of time of the power supply apparatus 1b is illustrated to be smaller than the predetermined amount of time of the power supply apparatus 1a.

(Operation when Other Power Supply Apparatus is not Activated)

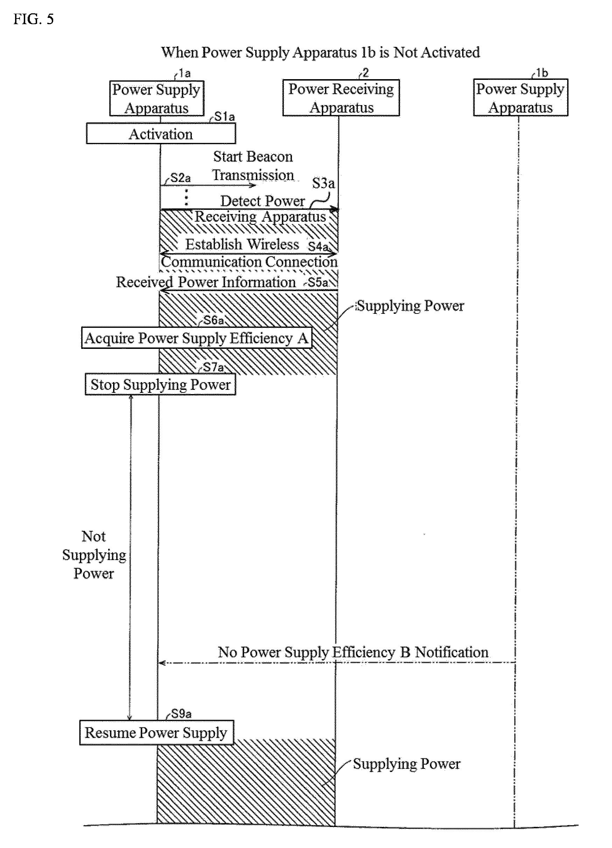

Next, a case where the power supply apparatus 1b is not activated will be described with reference to FIG. 5. The same process as the process in FIG. 3 will be denoted by the same reference numerals, and a description thereof will be omitted.

In this case, first, in step S1a to step S7a, the same process as illustrated in FIG. 3 is carried out by the power supply apparatus 1a. On the other hand, unlike the case illustrated in FIG. 3 and FIG. 4, since the power supply apparatus 1b is not activated, each process described above is not carried out, and the power supply efficiency B is not notified from the power supply apparatus 1b to the power supply apparatus 1a.

In the case illustrated in FIG. 5, in the power supply apparatus 1a, it is determined that the power supply efficiency B of the other power supply apparatus 1b cannot be acquired in a predetermined time while the power supply is stopped at a timing in which a predetermined time has elapsed from the stopping process of the supply power of step S7a. As a result, in step S9a, the stopped power supply is resumed.

As described above, in the power supply system 100, a plurality (two) of adjacent power supply apparatus 1 (1a and 1b) are configured to appropriately notify the power supply efficiency (power supply efficiency A or power supply efficiency B) of the equipment itself to the other power supply apparatus 1, and to supply power to the power receiving apparatus 2 from which ever of the power supply apparatus 1 that has the larger power supply efficiency.

(Power Supply Determination Process of the First Example)

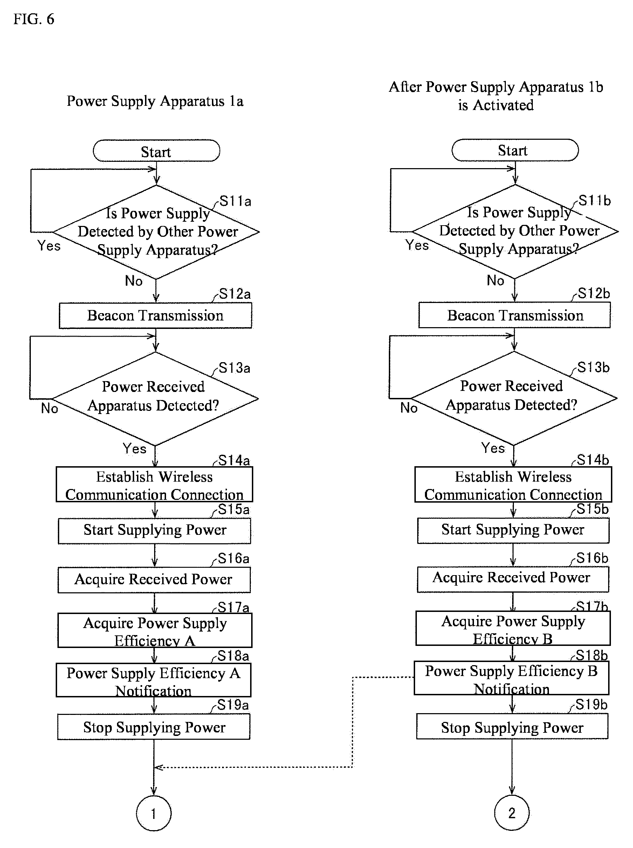

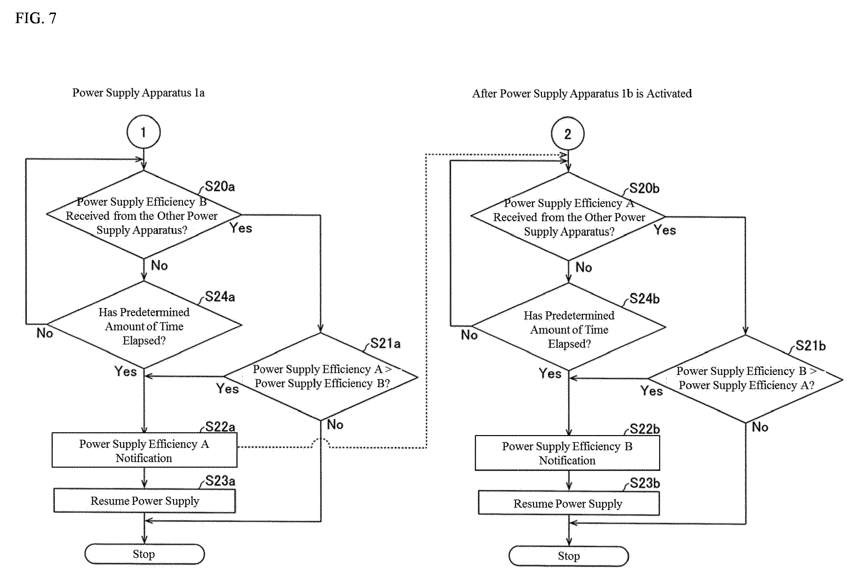

Next, the power supply determination process in the power supply apparatus 1 according to one or more embodiments of the first example of the present invention will be described based on a flowchart with reference to FIG. 6 and FIG. 7. The flowchart summarizes the content of the sequence diagram of FIG. 3 through FIG. 5. Here, a case in which the power supply apparatus 1b is activated after the power supply apparatus 1a will be described in the same manner as the case illustrated in FIG. 3 through FIG. 5. The operation of the power supply apparatus 1a is controlled by the controller 17 of the power supply apparatus 1a, and the operation of the power supply apparatus 1b is controlled by the controller 17 of the power supply apparatus 1b. In addition, in FIG. 6 and FIG. 7, for ease of understanding, the process of the power supply apparatus 1a will be denoted by "a" and the process of the power supply apparatus 1b will be denoted by "b".

First, as illustrated in FIG. 6, when the power supply apparatus 1a is activated, in step S11a, it determines whether or not it has been detected that the other power supply apparatus 1b is supplying power to the power receiving apparatus 2. When it is determined that it has been detected that the other power supply apparatus 1b is supplying power to the power receiving apparatus 2 (when "Yes"), the process of step S11a is repeated.

In addition, when it is determined that it has not been detected that the other power supply apparatus 1b is supplying power to the power receiving apparatus 2 (when "No") it proceeds to step S12a. Then, in step S12a, a beacon in transmitted from the power supply antenna 14 of the power supply apparatus 1a.

Then, in step S13a, it is determined whether or not the power receiving apparatus 2 is detected by the beacon from the power supply antenna 14 of the power supply apparatus 1a. When it is determined the power receiving apparatus 2 has not been detected by the beacon from the power supply antenna 14 (when "No"), the process of step S13a is repeated. In other words, until the power receiving apparatus 2 is detected, a beacon is continually transmitted.

In addition, when it is determined that the power receiving apparatus 2 has been detected by the beacon from the power supply antenna 14(when "Yes"), it proceeds to step S 14a.

Then, in step S14a, by carrying out communication based on a predetermined wireless communication standard between the power supply apparatus 1a and the power receiving apparatus 2, a wireless communication connection is established between the power supply apparatus 1a and the power receiving apparatus 2.

Then, in step S15a, power supply is started to the power receiving apparatus 2 from the power supply antenna 14 of the power supply apparatus 1a.

Then, in step S16a, received power information including a received power value is acquired from the power receiving apparatus 2 via the communication circuit 16 of the power supply apparatus 1a. As a result, in step S17a, the power supply efficiency A of the power supply apparatus 1a is acquired by the aforementioned equation (1), based on the received power value acquired from the power receiving apparatus 2 and the transmitted power value of the equipment itself (power supply apparatus 1a).

Then, in step S18a, the power supply efficiency A acquired in step S17a is notified to the power supply apparatus 1b. At this point, since the process of step S20b described later in the power supply apparatus 1b is not executed, the power supply efficiency A from the power supply apparatus 1a is not acquired by the power supply apparatus 1b.

Then, in step S19a, the power supply started in step S15a is stopped.

Here, in the power supply apparatus 1b activated after the power supply apparatus 1a, in step S11b, it is determined whether or not it has been detected that the other power supply apparatus 1a is supplying power to the power receiving apparatus 2. When it is determined that it has been detected that the other power supply apparatus 1a is supplying power to the power receiving apparatus 2 (when "Yes"), the process of step S11b is repeated. In the case illustrated in FIG. 6, while the process of step S12a through step S18a is carried out in at least the power supply apparatus 1a, since it is determined that it has been detected that the other power supply apparatus 1a is supplying power to the power receiving apparatus 2, the process of step S11b is repeated.

In addition, when it is determined that it has not been detected that the other power supply apparatus 1a is supplying power to the power receiving apparatus 2 (when "No") it proceeds to step S12b. In the case illustrated in FIG. 6, when the process of step S19a is carried out in the power supply apparatus 1a, since it is determined that it has not been detected that the other power supply apparatus 1a is supplying power to the power receiving apparatus 2, it proceeds to step S12b. Then, in step S12b, a beacon is transmitted from the power supply antenna 14 of the power supply apparatus 1b.

Then, in step S13b, it is determined whether or not the power receiving apparatus 2 is detected by the beacon from the power supply antenna 14 of the power supply apparatus 1b. When it is determined that the power receiving apparatus 2 has not been detected by the beacon from the power supply antenna 14 (when "No"), the process of step S13b is repeated.

In addition, when it is determined that the power receiving apparatus 2 has been detected by the beacon from the power antenna 14 (when "Yes"), it proceeds to step S14b.

Then, in step S14b, by carrying out communication based on a predetermined wireless communication standard between the power supply apparatus 1b and the power receiving apparatus 2, a wireless communication connection is established between the power supply apparatus 1b and the power receiving apparatus 2.

Then, in step S15b, power supply is started to the power receiving apparatus 2 from the power supply antenna 14 of the power supply apparatus 1b.

Then, in the step S16b, received power information including a received power value is acquired from the power receiving apparatus 2 via the communication circuit 16 of the power supply apparatus 1b. As a result, in step S17b, the power supply efficiency B of the power supply apparatus 1b is acquired using the aforementioned equation (1), based on the received power value acquired from the power receiving apparatus 2, and the transmitted power value of the equipment itself (power supply apparatus 1b).

Then, in step S18b, the power supply efficiency B acquired in step S17b is notified to the power supply apparatus 1a. Then, in step S19b, the power supply started in step S15b is stopped.

As illustrated in FIG. 7, the power supply apparatus 1a, in step S20a, determines whether or not the power supply efficiency B from the other power supply apparatus 1b has been sent (acquired). When it determines that the power supply efficiency B has been sent from the other power supply apparatus 1b (when "Yes"), it proceeds to step S21a. In the case illustrated in FIG. 7, since the power supply efficiency B has been notified by the process of step S18b (refer to FIG. 6) of the power supply apparatus 1b, it is determined that the power supply efficiency B has been sent from the other power supply apparatus 1b, and proceeds to step S21a.

Then, in step S21a, it determines whether or not the power supply efficiency A of the equipment itself (power supply apparatus 1a) is larger than the power supply efficiency B of the other power supply apparatus 1b. When it determines that the power supply efficiency A of the equipment itself (power supply apparatus 1a) is larger than the power supply efficiency B of the other power supply apparatus 1b (when "Yes"), it proceeds to step S22a.

Then, in step S22a, the power supply efficiency A is notified to the power supply apparatus 1b from the power supply apparatus 1a. Thereafter, in step S23a, the power supply from the power supply apparatus 1a stopped in step S19a is resumed. Then, the power supply determination process of the power supply apparatus 1a is completed. In the flowchart of the power supply determination process, when the process proceeds in order of completion of the power supply determination process, step S20a, S21a, S22a, and S23a, it substantially corresponds to the process of the sequence diagram illustrated in FIG. 3.

In addition, in step S21a, when it determines that the power supply efficiency A of the equipment itself (power supply apparatus 1a) is less than or equal to the power supply efficiency B of the other power supply apparatus 1b (when "No"), the power supply is not resumed, remains stopped, and the power supply determination process of the power supply apparatus 1a is completed. In the flowchart of the power supply determination process, when the process proceeds in order of completion of the power supply determination process, step S20a, and S21a, it substantially corresponds to the process of the sequence diagram illustrated in FIG. 4.

In addition, in step S20a, when it is determined that the power supply efficiency B has not been sent from the other power supply apparatus 1b (when "No"), it proceeds to step S24a.

Then, in step S24a, it is determined whether or not a predetermined amount of time has elapsed. When it is determined that the predetermined amount of time has not elapsed (when "No"), it returns to step S20a, and it is again determined whether or not the power supply efficiency B has been sent (acquired) from the other power supply apparatus 1b.

In addition, when it is determined that the predetermined amount of time has elapsed (when "Yes"), it proceeds to step S22a. Then, in step S22a, the power supply efficiency A is notified to the power supply apparatus 1b from the power supply apparatus 1a. Thereafter, in step S23a, the power supply from the power supply apparatus 1a stopped in step S19a is resumed. Then, the power supply determination process of the power supply apparatus 1a is completed. In the flowchart of the power supply determination process, when the process proceeds in order of completion of the power supply determination process, step S20a, S24a, S22a, and S23a, it substantially corresponds to the process of the sequence diagram illustrated in FIG. 5.

On the other hand, in the power supply apparatus 1b in which the power supply has been stopped in step S19b, in step S20b, it is determined whether or not the power supply efficiency A has been sent (acquired) from the other power supply apparatus 1a. When it is determined that the power supply efficiency A has been sent from the other power supply apparatus 1a (when "Yes"), it proceeds to step S21b. In other words, when the process of step S22a is carried out in the power supply apparatus 1a, it is determined that the power supply efficiency A has been sent from the other power supply apparatus 1a, and proceeds to step S21b.

Then, in step S21b, it is determined whether or not the power supply efficiency B of the equipment itself (power supply apparatus 1b) is larger than the power supply efficiency A of the other power supply apparatus 1a. When it is determined that the power supply efficiency B of the equipment itself (power supply apparatus 1b) is larger than the power supply efficiency A of the other power supply apparatus 1a (when "Yes"), it proceeds to step S22b.

Then, in step S22b, the power supply efficiency B is notified to the power supply apparatus 1a from the power supply apparatus 1b. At the time, since the process of step S20a has not been executed in the power supply apparatus 1a (it has already been executed), the power supply efficiency B from the power supply apparatus 1b has not been acquired in the power supply apparatus 1a.

Thereafter, in step S23b, the power supply of the power supply apparatus 1a stopped in step S19b is resumed. Then, the power supply determination process of the power supply apparatus 1b is completed.

In addition, in step S21b, when it is determined that the power supply efficiency B of the equipment itself (power supply apparatus 1b) is less than or equal to the power supply efficiency A of the other power supply apparatus 1a (when "No"), the power supply is not resumed, remains stopped, and the power supply determination process of the power supply apparatus 1b is completed. In the flowchart of the power supply determination process, when the process proceeds in order of completion of the power supply determination process, step S20b, and S21b, it substantially corresponds to the process of the sequence diagram illustrated in FIG. 3.

In addition, in step S20b, when it is determined that the power supply efficiency A has not been sent from the other power supply apparatus 1a (when "No"), it proceeds to step S24b.

Then, in step S24b, it is determined whether or not a predetermined amount of time has elapsed. When it is determined that a predetermined amount of time has not elapsed (when "No"), it returns to step S20b, and it is again determined whether or not the power supply efficiency A has been sent (acquired) from the other power supply apparatus 1a.

In addition, when it is determined that a predetermined amount of has elapsed (when "Yes"), it proceeds to step S22b. Then, in step S22b, the power supply efficiency B is notified to the power supply apparatus 1a from the power supply apparatus 1b. Thereafter, in step S23b, the power supply of the power supply apparatus 1b stopped in step S19b is resumed. Then, the power supply determination process of the power supply apparatus 1b is completed. In the flowchart of the power supply determination process, when the process proceeds in order of completion of the power supply determination process, step S20b, S24b, S22b, and S23b, it substantially corresponds to the process of the sequence diagram illustrated in FIG. 4.

(Effects of First Example)

One or more of the following effects can be obtained according to one or more embodiments of the first example of the present invention.

In one or more embodiments of the first example of the present invention, as described above, the power supply efficiency (for example, power supply efficiency A) of the equipment itself regarding the power receiving apparatus 2 is acquired, the power supply is stopped, and controller 17 is configured so that the power supply efficiency (for example, power supply efficiency B) of the other power supply apparatus 1 is acquired via the communication circuit 16. Thereby, the power supply is stopped after acquiring the power supply efficiency of the equipment itself, and it is possible to acquire the power supply efficiency of the other power supply apparatus 1 relating to the power supply of the other power supply apparatus 1 while suppressing the occurrence of interference between adjacent power supply apparatus 1 (1a and 1b). In addition, in order to suppress the occurrence of interference between adjacent power supply apparatus 1, since it is not necessary for it to be configured to vary the magnetic field, it is possible to simplify the apparatus configuration. Therefore, it is possible to suppress the occurrence of interference between adjacent power supply apparatus 1 while simplifying the apparatus configuration. In addition, when the power supply efficiency of the equipment itself is larger than the power supply efficiency of the other power supply apparatus 1, the controller 17 is configured to carry out control for resuming the power supply. Thus, since the power supply to the power receiving apparatus 2 is resumed when the power supply efficiency of the equipment itself is larger than the power supply efficiency of the other power supply apparatus 1, an efficient power supply can easily be carried out to the power receiving apparatus 2. As a result, the lengthening of the charging time of the power receiving apparatus 2 can be suppressed.

In addition, in one or more embodiments of the first example of the present invention, as described above, when the power supply efficiency of the equipment itself is less than or equal to the power supply efficiency of the other power supply apparatus 1, the controller 17 is configured to carry out control for not resuming the power supply. Thus, since the power supply can be in a stopped state, it is possible to simply carry out power supply to the power receiving apparatus 2 from the other power supply apparatus 1 in which the power supply efficiency is greater than or equal to the power supply efficiency of the equipment itself, while suppressing the occurrence of interference between adjacent power supply apparatus 1. As a result, an efficient power supply can more easily be carried out to the power receiving apparatus 2.

In addition, in one or more embodiments of the first example of the present invention, as described above, the controller 17 is configured to carry out control for notifying of the power supply efficiency of the equipment itself to the other power supply apparatus 1. Thus, even in the other power supply apparatus 1, the power supply efficiency (power supply efficiency of the equipment itself and the power supply efficiency of the other power supply apparatus 1) can be determined. As a result, since it is possible to supply power to the power receiving apparatus 2 from any one of the power supply apparatus 1 in which the power supply efficiency is large while suppressing the occurrence of interference between adjacent power supply apparatus 1, power can efficiently and reliably be supplied to the power receiving apparatus 2.

In addition, in one or more embodiments of the first example of the present invention, as described above, when the power supply efficiency of the other power supply apparatus 1 is not acquired within the predetermined amount of time, the controller 17 is configured to carry out control for resuming the power supply. Thus, unlike the case where the power supply remains stopped until the power supply efficiency of the other power supply apparatus 1 is acquired, a power supply stopped at timing in which a predetermined amount of time has elapsed can be resumed. As a result, in a case where the power supply efficiency of the other power supply apparatus 1 cannot be acquired from the other power supply apparatus 1, it is possible to reduce the occurrence of a case in which power is not supplied to the power receiving apparatus 2.

In addition, in one or more embodiments of the first example of the present invention, as described above, when the power receiving apparatus 2 is detected by an output signal (beacon) from the power supply antenna 14, the power supply efficiency of the equipment itself and the power supply efficiency of the other power supply apparatus 1 are acquired, and the controller 17 is configured to carry out control for determining whether or not the power supply efficiency of the equipment itself is larger than the power supply efficiency of the other power supply apparatus 1. Thus, the power receiving apparatus 2 is detected by a beacon from the power supply antenna 14, and it is possible to determine whether or not the power supply efficiency of the equipment itself is larger than the power supply efficiency of the other power supply apparatus 1 at a timing in which the power supply is started. As a result, an efficient power supply can easily be carried out to the power receiving apparatus 2 from the timing in which the power supply is started.

In addition, in one or more embodiments of the first example of the present invention, as described above, when it has not been detected by the detector 15 that the other power supply apparatus 1 is supplying power to the power receiving apparatus 2, the controller 17 is configured to carry out a power supply. Thus, while power is supplied to the power receiving apparatus 2 from the other power supply apparatus 1, since power is not supplied to the power receiving apparatus 2 from the equipment itself, it is possible to reliably suppress the occurrence of interference between the power supply apparatus 1. In addition, in order to suppress the occurrence of interference between adjacent power supply apparatus 1, since it is not necessary for it to be configured to vary the magnetic field, it is possible to reliably suppress the occurrence of interference between adjacent power supply apparatus 1 while simplifying the apparatus configuration.

(Second Example)

Next, embodiments of the second example of the present invention will be described with reference to FIG. 2 and FIG. 7 through FIG. 9. In one or more embodiments of the second example of the present invention, in addition to the configuration of one or more embodiments of the first example of the present invention, the power supply efficiency of the equipment itself (third value) and the power supply efficiency of another power supply apparatus (fouth value) again may be acquired at a predetermined timing while the power supply is resumed, and an example of determining whether or not the power supply efficiency of the equipment itself is larger than the power supply efficiency of the other power supply apparatus will be described.

(Configuration of Power Supply System)

The power supply system 200 according to one or more embodiments of the second example of the present invention, as illustrated in FIG. 2, is different than the power supply system 100 according to one or more embodiments of the first example of the present invention in that it includes a power supply apparatus 101 (101a and 101b). In addition, the power supply apparatus 101 (101a and 101b) is different than the power supply apparatus 1 according to one or more embodiments of the first example of the present invention in that it includes a controller 117. The same configuration as one or more embodiments of the first example of the present invention will be denoted by the same reference numerals and a description thereof will be omitted.

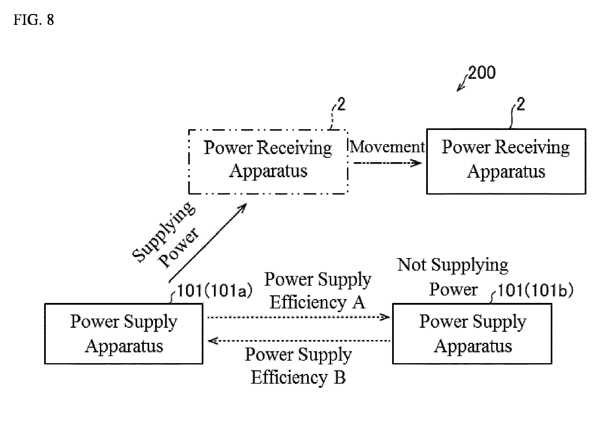

In the power supply system 200 using a non-contact method, the power supply environment varies and the power supply efficiency varies by the positional relationship of the power supply apparatus 101 and the power receiving apparatus 2. Therefore, as illustrated in FIG. 8, during power supply due to the power supply apparatus 101a for example, when the power receiving apparatus 2 is moved by the user, the power supply efficiency can be increased more when supplying power to the power receiving apparatus 2 from the power supply apparatus 101b that is not supplying power rather than continuing power supply to the power receiving apparatus 2 from the power supply apparatus 101a that is supplying power.

(Configuration Relating to Power Supply Operation)

Thus, in one or more embodiments of the second example of the present invention, the controller 117 of the power supply apparatus 101, while the power supply is resumed, is configured to again acquire the power supply efficiency of the equipment itself when varied so that the power supply efficiency of the equipment itself decreases; after acquiring the power supply efficiency of the equipment itself, the power supply is stopped, and while the power supply is stopped, again acquires the power supply efficiency for the power receiving apparatus 2 from the other power supply apparatus101 (101b for 101a or 101a for 101b) via the communication circuit 16.

In addition, in one or more embodiments of the second example of the present invention, the controller 117, while the power supply is resumed, is configured to carry out control for again determining whether or not the power supply efficiency of the equipment itself is larger than the power supply efficiency of the other power supply apparatus 101, based on the power supply efficiency of the equipment itself and the power supply efficiency of the other power supply apparatus 101 that has been again acquired.

Then, the controller 117, in the same manner as one or more embodiments of the first example of the present invention, is configured to carry out control for resuming the stopped power supply when the power supply efficiency of the equipment itself is larger than the power supply efficiency of the other power supply apparatus 101, and to carry out control for not resuming that stopped power supply when the power supply efficiency of the equipment itself is less than or equal to the power supply efficiency of the other power supply apparatus 101.

(Power Supply Determination Process of the Second Example)

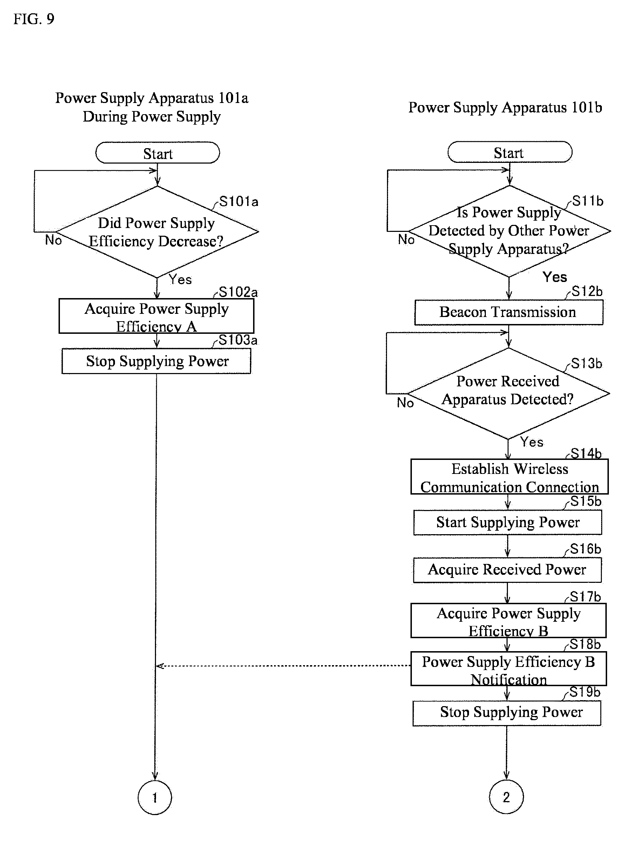

Next, the power supply determination process in the power supply apparatus 101 in one or more embodiments of the second example of the present invention will be described based on a flowchart with reference to FIG. 7 and FIG. 9. Here, a case in which the power supply apparatus 101a is supplying power will be described. The operation of the power supply apparatus 101a is controlled by the controller 117 of the power supply apparatus 101a, and the operation of the power supply apparatus 101b is controlled by the controller 117 of the power supply apparatus 101b. In addition, in FIG. 7 and FIG. 9, for ease of understanding, the process of the power supply apparatus 101a is denoted by "a", and the process of the power supply apparatus 101b is denoted by "b". In addition, the same process as the power supply determination process according to one or more embodiments of the first example of the present invention will be denoted by the same reference numerals, and a description thereof will be omitted.

First, as illustrated in FIG. 9, in the power supply apparatus 101a during power supply, in step S101a, it is determined whether or not it varied so that a power supply efficiency A of the equipment itself decreases. For example, when the power supply efficiency A of only a predetermined value decreases from the power supply efficiency A acquired at a timing in which the power supply was resumed, it is possible to determine that it varied so that the power supply efficiency A of the equipment itself decreases.

When is has not been determined that it varied so that the power supply efficiency A of the equipment itself decreases, the process of step S101a is repeated. In other words, the power supply is continued until varied so that the power supply efficiency A of the equipment itself decreases. While power continues to be supplied, the current power supply efficiency A is acquired at anytime.

In addition, when determined that it varied so that the power supply efficiency A of the equipment itself decreases, it proceeds to step S102a. When using the power supply efficiency A acquired directly prior, the process of step S102a may not be carried out. Then, in step S102a, the current power supply efficiency A is acquired. Thereafter, in step S103a, the power supply is stopped.

In the power supply apparatus 101b not supplying power, in the same manner as one or more embodiments of the first example of the present invention, in step S11b, it is determined whether or not it has been detected that the other power supply apparatus 101 a is supplying power to the power receiving apparatus 2. In the case illustrated in FIG. 9, while the process of S101a and S102a is carried out in at least the power supply apparatus 101a, since it is determined that it has been detected that that other power supply apparatus 101a is supplying power to the power receiving apparatus 2, the process of step S11b is repeated.

In addition, in the case illustrated in FIG. 9, when the process of step S103a is carried out in the power supply apparatus 101a, since in the power supply apparatus 101b it is determined that it has not been detected that the other power supply apparatus 101a is supplying power to the power receiving apparatus 2, it proceeds to step S12b. The process content thereafter is the same as one or more embodiments of the first example of the present invention. In other words, in the power supply apparatus 101a, the process of step S20a through step S24a (refer to FIG. 7) is appropriately executed, and in the power supply apparatus 101b, the process of step S12b through step S24b (refer to FIG. 7 and FIG. 9) is appropriately executed.

As described above, in the power supply system 200 according to one or more embodiments of the second example of the present invention, a plurality (two) of adjacent power supply apparatus 101 (101a and 101b) appropriately notifies the power supply efficiency (power supply efficiency A or power supply efficiency B) of the equipment itself to the other power supply apparatus 101 even while the power supply is resumed, and is configured to supply power to the power receiving apparatus 2 from any one of the power supply apparatus 101 in which the power supply efficiency is large.

Other configurations of one or more embodiments of the second example of the present invention may be the same as one or more embodiments of the first example of the present invention.

(Effects of Second Example)

One or more of the following effects can be obtained in one or more embodiments of the second example of the present invention.

In one or more embodiments of the second example of the present invention, as described above, the power supply efficiency of the equipment itself to the power supply apparatus 2 is acquired, power supply is stopped, and the controller 117 is configured to acquire a power supply efficiency of the other power supply apparatus 101 via the communication circuit 16. In addition, when the power supply efficiency of the equipment itself is larger than the power supply efficiency of the other power supply apparatus 101, the controller 117 is configured to carry out control for resuming the power supply. Thus, in the same manner as one or more embodiments of the first example of the present invention, an efficient power supply can easily be carried out to the power receiving apparatus 2 while suppressing the occurrence of interference between adjacent power supply apparatus 101.

In addition, in one or more embodiments of the second example of the present invention, as described above, the power supply efficiency of the equipment itself and the power supply efficiency of the other power supply apparatus 101 is acquired when the power supply apparatus of the equipment itself while the power supply is resumed decreases, and the controller 117 is configured to carry out control for determining whether or not the power supply efficiency of the equipment itself is larger than the power supply efficiency of the other power supply apparatus 101. Thus, while the power supply is resumed, even when the power supply efficiency of the equipment itself decreases by varying the position of the power receiving apparatus 2 and the like, it is possible to again determine whether or not the power supply efficiency of the equipment itself is larger than the power supply efficiency of the other power supply apparatus 101. As a result, an efficient power supply can be carried out even more easily to the power receiving apparatus.

Other effects of one or more embodiments of the second example of the present invention may be the same as one or more embodiments of the first example of the present invention.

(Third Example)

Next, embodiments of the third example of the present invention will be described with reference to FIG. 2, FIG. 7, FIG. 10 and FIG. 11. In one or more embodiments of the third example of the present invention, in addition to the configuration of one or more embodiments of the first example of the present invention, while the power supply is resumed, the power supply efficiency of the equipment itself and the power supply efficiency of another power supply apparatus is again acquired at a predetermined timing, and another example differing from one or more embodiments of the second example of the present invention for determining whether or not the power supply efficiency of the equipment itself is larger than the power supply efficiency of the other power supply apparatus will be described.

(Configuration of Power Supply System)

The power supply system 300 according to one or more embodiments of the third example of the present invention, as illustrated in FIG. 2, is different than the power supply system 100 according to one or more embodiments of the first example of the present invention in that it includes the power supply apparatus 201 (201a and 201b). In addition, the power supply apparatus 201 (201a and 201b) are different than the power supply apparatus 1 according to one or more embodiments of the first example of the present invention in that they include a controller 217. The same configuration as one or more embodiments of the first example of the present invention will be denoted by the same reference numerals and a description thereof will be omitted.

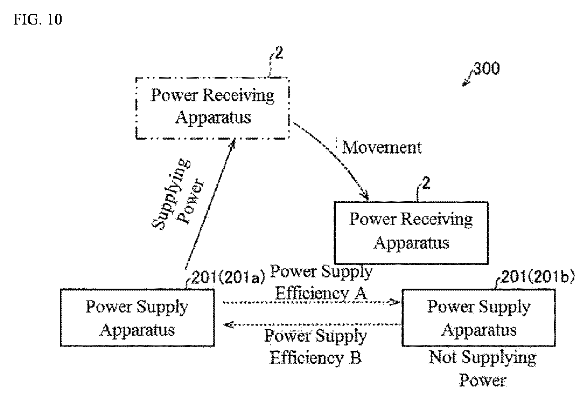

As described in one or more embodiments of the second example of the present invention, in the power supply system 300 using a non-contact method, the power supply environment varies and the power supply efficiency varies according to the positional relationship of the power supply apparatus 201 and the power receiving apparatus 2. In this case, as illustrated in FIG. 10, when the power receiving apparatus 2 is moved a circular path around the power supply apparatus 201a during power supply, the power supply efficiency of the power supply apparatus 201a which is supplying power does not vary, and the power supply efficiency of the power supply apparatus 201b which is not supplying power can increase. Therefore, in consideration of such a case, even if the power supply efficiency of the power supply apparatus 201a does not change during power supply, whether or not the power supply efficiency of the equipment itself is larger than the power supply efficiency of the other power supply apparatus 201 at a predetermined timing may be determined.

(Configuration Relating to Power Supply Operation)

Thus, in one or more embodiments of the third example of the present invention, the controller 217 of the power supply apparatus 201, while the power supply is resumed, again acquires the power supply efficiency of the equipment itself at a predetermined time interval (for example, a several second interval), power supply is stopped after acquiring the power supply efficiency of the equipment itself, and is configured to again acquire the power supply efficiency for the power receiving apparatus 2 by the other power supply apparatus 201 (201b for 201a or 201a for 201b) via the communication circuit 16 while power supply is stopped.

In addition, in one or more embodiments of the third example of the present invention, the controller 217, while the power supply is resumed, is configured to carry out control for again determining whether or not the power supply efficiency of the equipment itself is larger than the power supply efficiency of the other power supply apparatus 201 based on the reacquired power supply efficiency of the equipment itself and the power supply of the other power supply apparatus 201

Then, the controller 217, in the same manner as one or more embodiments of the first example of the present invention, is configured to carry out control for resuming the stopped power supply when the power supply efficiency of the equipment itself is larger than the power supply of the other power supply apparatus 201, and to carry out control for not resuming the power supply when the power supply efficiency of the equipment itself is less than or equal to the power supply efficiency of the other power supply apparatus 201.

(Power Supply Determination Process of Third Example)

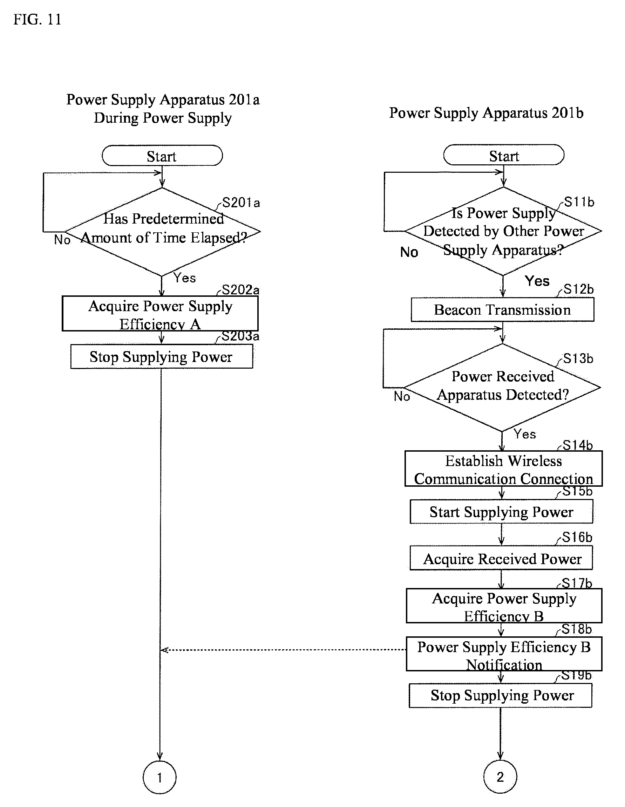

Next, the power supply determination process in the power supply apparatus 201 according to one or more embodiments of the third example of the present invention will be described based on a flowchart with reference to FIG. 7 and FIG. 11. Here, a case in which the power supply apparatus 201a supplying power is described. The operation of the power supply apparatus 201a is controlled by the controller 217 of the power supply apparatus 201a, and the operation of the power supply apparatus 201b is controlled by the controller 217 of the power supply apparatus 201b. In addition, in FIG. 7 and FIG. 11, for ease of understanding, the process of the power supply apparatus 201a will be denoted by "a" and the process of the power supply apparatus 201b will be denoted by "b". In addition, the same process as the power supply determination process according to one or more embodiments of the first example of the present invention will be denoted by the same reference numerals, and a description thereof will be omitted.

First, as illustrated in FIG. 11, in the power supply apparatus 201a during power supply, in step S201a, it is determined whether or not a predetermined amount of time has elapsed in order to again determine whether or not the power supply efficiency of the equipment itself is larger than the power supply efficiency of the other power supply apparatus 201.

When it is determined that a predetermined amount of time has not elapsed, the process of step S201a is repeated. In other words, power supply is continued until it is determined that a predetermined amount of time has elapsed.

In addition, when it is determined that a predetermined amount of time has elapsed, it proceeds to step S202a. Then, in step S202a, the current power supply efficiency A is acquired. Thereafter, in step S203a, power supply is stopped.

Here, in the power supply apparatus 201b not supplying power, in the same manner as one or more embodiments of the first example of the present invention, it is determined whether or not it has been detected that the other power supply apparatus is supplying power to the power receiving apparatus 2 in step S11b. In the case illustrated in FIG. 11, while the process of steps S201a and S202a are carried out in at least the power supply apparatus 201a, because it is determined that it has been detected that the other power supply apparatus 201a is supplying power to the power receiving apparatus 2, the process of step S11b is repeated.

In addition, in the case illustrated in FIG. 11, when the process of step S203a is carried out in the power supply apparatus 201a, since it is determined in the power supply apparatus 201b that it has not detected that the other power supply apparatus 201a is supplying power to the power receiving apparatus 2, and proceeds to step S12b. The process content thereafter is the same as one or more embodiments of the first example of the present invention. In other words, in the power supply apparatus 201a, the process of step S20a through step S24a (refer to FIG. 7) is appropriately executed, and in supply power apparatus 201b, the process of step S12b through step S24b (refer to FIG. 7 and FIG. 11) is appropriately executed.

As described above, even in the power supply system 300 in one or more embodiments of the third example of the present invention, a plurality (two) of adjacent power supply apparatus 201 (201a and 201b) appropriately notify the power supply efficiency (power supply efficiency A or power supply efficiency B) of the equipment itself to the other power supply apparatus 201 while the power supply is resumed, and are configured to supply power to the power receiving apparatus 2 from any one of the power supply apparatus 201 in which the power supply efficiency is large.

Other configurations of one or more embodiments of the third example of the present invention may be the same as one or more embodiments of the first example of the present invention.

(Effects of Third Example)

One or more of the follow effects can be obtained according to one or more embodiments of the third example of the present invention.

In one or more embodiments of the third example of the present invention, as described above, the power supply efficiency of the equipment itself is acquired regarding the power receiving apparatus 2, power supply is stopped, and the controller 217 is configured to acquire the power supply efficiency of the other power supply apparatus 201 via the communication circuit 16. In addition, the controller 217 is configured to carry out control for resuming the power supply when the power supply efficiency of the equipment itself is larger than the power supply efficiency of the other power supply apparatus 201. Thus, in the same manner as one or more embodiments of the first example of the present invention, an efficient power supply can easily be carried out to the power receiving apparatus 2 while suppressing the occurrence of interference between adjacent power supply apparatus 201.

In addition, in one or more embodiments of the third example of the present invention, as described above, the power supply efficiency of the equipment itself and the power supply efficiency of the other power supply apparatus 201 are acquired at a predetermined time interval while the power supply is resumed, and the controller 217 is configured to carry out control for determining whether or not the power supply efficiency of the equipment itself is larger than the power supply efficiency of the other power supply apparatus 201. Thus, since it can regularly be determined whether or not the power supply efficiency of the equipment itself is larger than the power supply efficiency of the other power supply apparatus 201 while the power supply is resumed, an efficient power supply can easily be carried out to the power receiving apparatus 2 even when the power supply environment varies.

Other effects of one or more embodiments of the third example of the present invention may be the same as one or more embodiments of the first example of the present invention.

(Fourth Example)

Next, embodiments of the fourth example of the present invention will be described with reference to FIG. 2, FIG. 7 and FIG. 12. In one or more embodiments of the fourth example of the present invention, in addition to the configuration according to one or more embodiments of the first example of the present invention, while the power supply is resumed, the power supply efficiency of the equipment itself and the power supply efficiency of another power supply apparatus are again acquired at a predetermined timing, and another example differing from one or more embodiments of the second and third examples of the present invention for determining whether or not the power supply efficiency of the equipment itself is larger than the power supply efficiency of the other power supply apparatus will be described.

(Configuration of Power Supply System)

The power supply system 400 according to one or more embodiments of the fourth example of the present invention, as illustrated in FIG. 2 is different than the power supply system 100 according to one or more embodiments of the first example of the present invention in that it includes power supply apparatus 301 (301a and 301b). In addition, the power supply apparatus 301 (301a and 301b) are different than the aforementioned power supply apparatus 1 in that they include a controller 317. The same configuration as one or more embodiments of the first example of the present invention will be denoted by the same reference numerals and a description thereof will be omitted.

(Configuration Relating to Power Supply Operation)

In one or more embodiments of the fourth example of the present invention, the controller 317 of the power supply apparatus 301, while the power supply is resumed, stops power supply when the current power supply efficiency of the equipment itself is a smaller value than a predetermined threshold value, and while the power supply is stopped, is configured to again acquire the power supply efficiency regarding the power receiving apparatus 2 for the other power supply apparatus 301 (301b for 301a or 301a for 301b) via the communication circuit 16.

In addition, in one or more embodiments of the fourth example of the present invention, the controller 317 is configured to carry out control for again determining whether or not the power supply efficiency of the equipment itself is larger than the power supply efficiency of the other power supply apparatus 301 based on the power supply efficiency of the current equipment itself and the reacquired power supply efficiency of the other power supply apparatus 301.

Then, the controller 317, in the same manner as one or more embodiments of the first example of the present invention, is configured to carry out control for resuming the stopped power supply when the power supply efficiency of the equipment itself is larger than the power supply efficiency of the other power supply apparatus 301, and to carry out control for not resuming the stopped power supply when the power supply efficiency of the equipment itself is less than or equal to the power supply efficiency of the other power supply apparatus 301.

(Power Supply Determination Process of the Fourth Example)

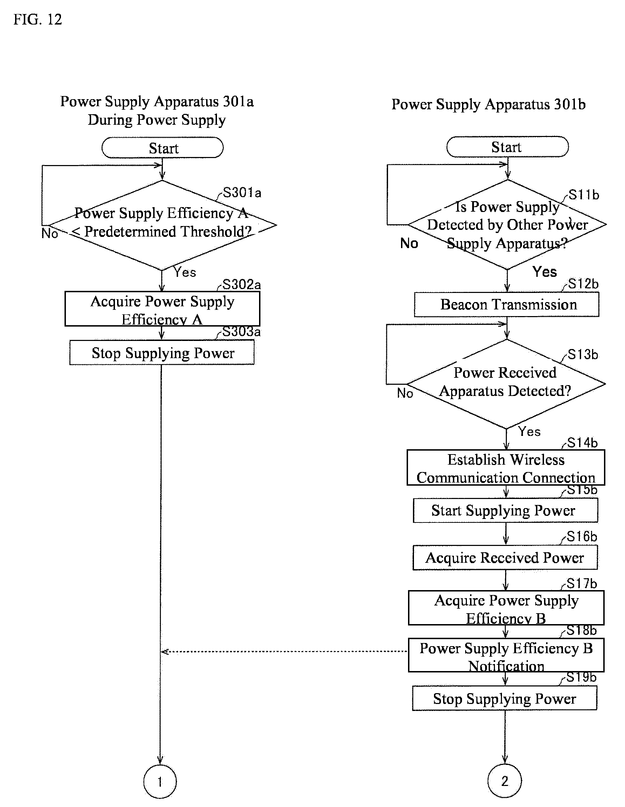

Next, the power supply determination process in the power supply apparatus 301 in one or more embodiments of the fourth example of the present invention will be described based on a flowchart with reference to FIG. 7 and FIG. 12. Here, a case in which the power supply apparatus 301a of among the plurality of power supply apparatus 301 supplying power will be described. The operation of the power supply apparatus 301a is controlled by the controller 317 of the power supply apparatus 301a, and the operation of the power supply apparatus 301b is controlled by the controller 317 of the power supply apparatus 301b. In addition, in FIG. 7 and FIG. 12, for ease of understanding, the process of the power supply apparatus 301a will be denoted by "a", and the process of the power supply apparatus 301b will be denoted by "b". In addition, the same process as the power supply determination process according to one or more embodiments of the first example of the present invention will be denoted by the same reference numerals, and a description thereof will be omitted.

First, as illustrated in FIG. 12, in the power supply apparatus 301a that is supplying power, in step S301a, it is determined whether or not the current power supply efficiency A is a smaller value than a predetermined threshold value.

When determined that the current power supply efficiency A is not a smaller value than the predetermined threshold value, the process of step S301a is repeated. In other words, power continues to be supplied until it is determined that the current power supply efficiency A is a smaller value than the predetermined threshold value. While power continues to be supplied, the current power supply efficiency A is acquired at any time.

In addition, when it is determined that the current power supply efficiency A is a smaller value than the predetermined threshold value, it proceeds to step S302a. Then, in step S302a, the current power supply efficiency A is acquired. When using the power supply efficiency A acquired immediately prior, the process of step S302a may not be used. Thereafter, in step S303a, the power supply is stopped.

In the power supply apparatus 301b, in the same manner as one or more embodiments of the first example of the present invention, in step S11b, it is determined whether or not it has been detected that the other power supply apparatus 301a is supplying power to the power receiving apparatus 2. In the case illustrated in FIG. 12, while the process of step S301a and S302a are carried out in at least the power supply apparatus 301a, since it is determined that is has been detected that that other power supply apparatus 301a is supplying power to the power receiving apparatus 2, the process of step S11b is repeated.

In addition, in the case illustrated in FIG. 12, when the process of step S303a is carried out in the power supply apparatus 301a, since it is determined that it has not been detected that the other power supply apparatus 301a is supplying power to the power receiving apparatus 2, it proceeds to step S12b. The process content thereafter is the same as one or more embodiments of the first example of the present invention. In other words, in the power supply apparatus 301a, the process of step S20a through step S24a (refer to FIG. 7) is appropriately executed, and in the power supply apparatus 301b, the process of step S12b through step S24b (refer to FIG. 7 and FIG. 12) is appropriately executed.

As described above, in the power supply system 400 according to one or more embodiments of the fourth example of the present invention, a plurality (two) of adjacent power supply apparatus 301 (301a and 301b), appropriately notify of the power supply efficiency (power supply efficiency A or power supply efficiency B) of the equipment itself even while the power supply is resumed, and are configured to supply power to the power receiving apparatus 2 from any one of the power supply apparatus 301 in which the power supply efficiency is large.

Other configurations of one or more embodiments of the fourth example of the present invention may be the same as one or more embodiments of the first example of the present invention.

(Effects of Fourth Example)

One or more of the following effects can be obtained according to one or more embodiments of the fourth example of the present invention.

In one or more embodiments of the fourth example of the present invention, as described above, the power supply efficiency of the equipment itself is acquired regarding the power receiving apparatus 2, the power supply is stopped, and the controller 317 is configured to acquire the power supply efficiency of the other power supply apparatus 301 via the communication circuit 16. In addition, when the power supply efficiency of the equipment itself is larger than the power supply efficiency of the other power supply apparatus 301, the controller 317 is configured to carry out control for resuming the stopped power supply. Thus, in the same manner as one or more embodiments of the first example of the present invention, an efficient power supply can easily be carried out to the power receiving apparatus 2 while suppressing the occurrence of interference between adjacent power supply apparatus 301.

In addition, according to one or more embodiments of the fourth example of the present invention, as described above, when the power supply efficiency of the equipment itself is a smaller value than the predetermined threshold value while the power supply is resumed, the power supply efficiency of the equipment itself and the power supply efficiency of the other power supply apparatus 301 is acquired, and the controller 317 is configured to carry out control for determining whether or not the power supply efficiency of the equipment itself is larger than the power supply efficiency of the other power supply apparatus 301. Thus, compared to when determining whether or not the power supply efficiency of the equipment itself is larger than the power supply efficiency of the other power supply apparatus 301 each time the power supply efficiency of the equipment itself decreases, an efficiency power supply can easily be carried out to the power receiving apparatus 2 while suppressing the complication of the process for the controller 317.

Other effects of one or more embodiments of the fourth example of the present invention are the same as one or more embodiments of the first example of the present invention.

(Variations)

Embodiments of the present invention disclosed herein are to be considered to be illustrative in all points and not restrictive. The scope of the present invention is indicated by the scope of claims rather than the aforementioned embodiments, and furthermore, all changes (variations) within the meaning and scope equivalent to the scope of claims are included. Additionally, the features of various embodiments may be combined to form further embodiments of the invention.

For example, in one or more embodiments of the first through fourth examples of the present invention, various aspects of the present invention are illustrated, but the present invention is not limited to the aspects of each embodiment. The present invention also includes an aspect that appropriately combines one or a plurality of configurations of each embodiment with a configuration of another embodiment.

In addition, in one or more embodiments of the first through fourth examples of the present invention, an example is illustrated in which the power supply system 100 (200, 300, 400) includes two power supply apparatus 1a and 1b (101a, 101b, 201a, 201b, 301a, 301b), but the present invention is not limited to this. The present invention may include a power supply system of three or more power supply apparatus. In this case, the respective power supply efficiencies of the plurality of other power supply apparatus are acquired in one of the power supply apparatus, and it may be determined whether or not the power supply apparatus of the equipment itself is larger than the power supply efficiencies of the plurality of other power supply apparatus.

In addition, in one or more embodiments of the first through fourth examples of the present invention, when the power supply efficiency of the equipment itself is less than or equal to the power supply efficiency of the other power supply apparatus 1 (101, 201, 301), an example is illustrated in which the power supply efficiency of the equipment itself is not notified to the other power supply apparatus 1 (101, 201, 301) from the equipment itself, but the present invention is not limited to this. The present invention may notify of the power supply efficiency of the equipment itself to the other power supply apparatus from the equipment itself when the power supply efficiency of the equipment itself is less than or equal to the power supply efficiency of the other power supply apparatus.

In addition, in one or more embodiments of the first through fourth examples of the present invention, an example is illustrated in which the power supply efficiency regarding the power receiving apparatus 2 of the equipment itself and the power supply efficiency regarding the power receiving apparatus 2 of the other power supply apparatus 1 (101, 201, 301) are used respectively as the first value and the second value relating to the power supply efficiency of the present invention, but the present invention is not limited to this. The present invention may use a value other than the power supply efficiency of the equipment itself regarding the power receiving apparatus and the power supply efficiency of the other power supplying apparatus regarding the power receiving apparatus, respectively as the first value and the second value relating to the power supply efficiency of the present invention. For example, it may use received power of the power receiving apparatus from the power supply from the equipment itself and the received power of the power receiving apparatus from the power supply from the other power supply apparatus, respectively as the first value and the second value relating to the power supply efficiency.

In addition, in one or more embodiments of the first example of the present invention, an example is illustrated in which the equipment itself and the other power supply apparatus 1 have a process flow of substantially the same power supply determination process, but the present invention is not limited to this. In the present invention, the equipment itself and the other power supply apparatus 1 may have a process flow of a power supply determination process differing from each other.

In addition, in one or more embodiments of the second example of the present invention, when it varies so that the power supply efficiency of the equipment itself decreases while the power supply is resumed, the power supply efficiency of the equipment itself and the power supply efficiency of the other power supply apparatus 101 are again acquired, and an example is illustrated in which it is again determined whether or not the power supply efficiency of the equipment itself is larger than the power supply efficiency of the other power supply apparatus 101, but the present invention is not limited to this. In the present invention, when it varies so that the power supply efficiency of the equipment itself increases while the power supply is resumed, the power supply efficiency of the equipment itself and the power supply efficiency of the other power supply apparatus may be again acquired, and may again determine whether or not the power supply efficiency of the equipment itself is larger than the power supply efficiency of the other power supply apparatus.

In addition, in one or more embodiments of the third example of the present invention, the power supply efficiency of the equipment itself and the power supply efficiency of the other power supply apparatus 201 are again acquired at a predetermined time interval while the power supply is resumed, and an example is illustrated for determining whether or not the power supply efficiency of the equipment itself is larger than the power supply efficiency of the other power supply apparatus 201, but the present invention is not limited to this. In the present invention, the power supply efficiency of the equipment itself and the power supply efficiency of the other power supply apparatus 201 may be acquired again at a different time interval while the power supply is resumed, and may again determine whether or not the power supply efficiency of the equipment itself is larger than the power supply efficiency of the other power supply apparatus 201.

In addition, in one or more embodiments of the first through fourth examples of the present invention, an example is illustrated in which a power receiving apparatus 2 in which a load 24 is provided is used as the power receiving apparatus of the present invention, but the present invention is not limited to this. In the present invention, a power receiving apparatus in which a load is not provided may be used. For example, a power receiving apparatus configured to supply power supplied from the power supply apparatus to an external load may be used.

In addition, one or more embodiments of the first through fourth examples of the present invention, for convenience of description, have been described by using a flow-drive type flowchart for carrying out a process in order along the process flow of the process of the controller 17 (117, 217, 317) of the power supply apparatus 1 (101, 201, 301) of the present invention, but the present invention is not limited to this. In the present invention, the process operation of the controller 17 (117, 217, 317) may be carried out by an event-drive type (event-driven) process for executing the process for each event. In this case, it may be carried out by a complete event-driven type, or may be carried out by combining event-driven and flow-driven.

[Explanation of References]

1, 1a, 1b, 101, 101a, 101b, 201, 201a, 201b, 301, 301a, 301b Power Supply Apparatus
2 Power Receiving Apparatus
11 Power Source
14 Power Supply Antenna
15 Detector
16 Communication circuit
17, 117, 217, 317 Controller

**Claims**

**1.** A power supply apparatus (1a) comprising:

a power supply antenna (14) configured to supply power from a power source (11) to a power receiving apparatus (2); and
a controller (17) configured to:

acquire a first value relating to charging information of the power receiving apparatus (2) from the power supply apparatus (1a),
acquire a second value relating to charging information of the power receiving apparatus (2) from a further power supply apparatus (1b),

compare the first value to the second value, and
cause the power supply apparatus (1a) to supply power to the power receiving apparatus (2) based on the comparison of the first value to the second value.

2. The power supply apparatus (1a) according to claim 1, wherein

the first value indicates a first power supply efficiency from the power supply apparatus (1a) to the power receiving apparatus (2), and
the second value indicates a second power supply efficiency from the further power supply apparatus (1b) to the power receiving apparatus (2).

3. The power supply apparatus (1a) according to claim 2, wherein the charging information includes received power of the power receiving apparatus (2) from the power supply apparatus (1a).

4. The power supply apparatus (1a) according to claim 3, wherein

the first power supply efficiency is a ratio of the received power of the power receiving apparatus (2) to the power supplied from the power supply antenna (14), and
the second power supply efficiency is a ratio of the received power of the power receiving apparatus (2) to the power supplied from a power supply antenna (14) of the further power supply apparatus (1b).

5. The power supply apparatus (1a) according to claim 4, further comprising:

a communication circuit (16) configured to receive the charging information from the power receiving apparatus (2).

6. The power supply apparatus (1a) according to any of claims 1-5, wherein the controller (17) is configured to cause the power supply apparatus (1a) to supply power to the power receiving apparatus (2) based on the first value being larger than the second value.

7. The power supply apparatus (1a) according to any of claims 2-5, wherein the controller (17) is configured to cause the power supply apparatus (1a) to supply power to the power receiving apparatus (2) based on the first power supply efficiency being higher than the second power supply efficiency.

8. The power supply apparatus (1a) according to any of claims 1-7, wherein the controller (17) is configured to cause the power supply apparatus (1a) to stop supplying power to the power receiving apparatus (2) when the controller (17) acquires the first value.

9. The power supply apparatus (1a) according to claim 8, wherein the controller (17) is configured to cause the power supply apparatus (17) to resume supplying power to the power receiving apparatus (2) based on the first value being larger than the second value.

10. The power supply apparatus (1a) according to claim 8 or claim 9, wherein the controller (17) is configured to cause the power supply apparatus (1a) to resume supplying power to the power receiving apparatus (2) when the controller (17) acquires the second value within a predetermined amount of time.

11. The power supply apparatus (1a) according to claim 8, wherein

the controller (17) is further configured to acquire:

a third value relating to power supply efficiency from the power supply apparatus (1a) to the power receiving apparatus (2) during resumed power supply, and
a fourth value relating to power supply efficiency from a still further power supply apparatus to the power receiving apparatus (2).

12. The power supply apparatus (1a) according to claim 11, wherein the controller (17) is configured to cause the power supply apparatus (1a) to resume supplying power to the power receiving apparatus (2) based on the third value being larger than the fourth value.

**13.** The power supply apparatus (1a) according to claim 11, wherein

the controller (17) is configured to determine whether the third value is larger than the fourth value when the controller (17) acquires the third value and the fourth value in a predetermined time interval during resumed power supply, and

the controller (17) is configured to cause the power supply apparatus (1a) to resume supplying power to the power receiving apparatus (2)based on the third value being larger than the fourth value.

**14.** The power supply apparatus (1a) according to any of claims 1-13, wherein

the power supply antenna (14) is configured to transmit an output signal for detecting the power receiving apparatus (2), and

the controller (17) is configured to cause the power supply apparatus (1a) to supply power to the power receiving apparatus (2) based on the power receiving apparatus (2) being detected.

**15.** The power supply apparatus (1a) according to any of claims 1-14, further comprising:

a detector (15) configured to detect the further power supply apparatus (1b) that supplies power to the power receiving apparatus (2); wherein

the controller (17) is configured to cause the power supply apparatus (1a) to supply power to the power receiving apparatus (2) when the detector (15) does not detects the further power supply apparatus (1b) that supplies the power to the power receiving apparatus (2).

FIG. 1

/100

/2

```
Power
Receiving
Apparatus
```

Supplying Power

Power Supply
Efficiency A

Not Supplying
Power

/1(1a)

/1(1b)

```
Power Supply
Apparatus
```

```
Power
Supply
Apparatus
```

Power Supply
Efficiency B

FIG. 2

Power Supply Apparatus 1(1b,1a,101,101a,101b,201,201a,201b,301,301a,301b)

- 11 Power Supply Unit
- 12 Amplifier
- 13 Relay Switch
- 14 Power Supply Antenna
- 15 Detector
- 16 Communication Circuit
- 17(117,217,317) Controller
  - 17a CPU
  - 17b ROM
  - 17c RAM

Power Supply

Communication

Communication — Other Power Supply Apparatus

Power Receiving Apparatus 2

- 21 Power Receiving Antenna
- 22 Rectifier
- 23 Voltage Converter
- 24 Load
- 25 Communication Circuit
- 26 Controller
  - 26a CPU
  - 26b ROM
  - 26c RAM

FIG. 3

When Power Supply Efficiency A > Power Supply Efficiency B

FIG. 4

When Power Supply Efficiency A ≤ Power Supply Efficiency B

FIG. 5

When Power Supply Apparatus 1b is Not Activated

Power Supply Apparatus `1a

Power Receiving Apparatus `2

Power Supply Apparatus `1b

S1a
Activation

Start Beacon Transmission

S2a

S3a
Detect Power Receiving Apparatus

Establish Wireless S4a
Communication Connection

Received Power Information S5a

Supplying Power

S6a
Acquire Power Supply Efficiency A

S7a
Stop Supplying Power

Not Supplying Power

No Power Supply Efficiency B Notification

S9a
Resume Power Supply

Supplying Power

FIG. 6

Power Supply Apparatus 1a

After Power Supply Apparatus 1b
is Activated

```
        ( Start )                              ( Start )
           │                                      │
           ▼                                      ▼
        ╱S11a                                  ╱S11b
      ╱ Is Power Supply ╲                    ╱ Is Power Supply ╲
     ╱ Detected by Other ╲                  ╱ Detected by Other ╲
Yes ╲  Power Supply      ╱            Yes  ╲  Power Supply      ╱
     ╲  Apparatus?      ╱                   ╲  Apparatus?      ╱
           │ No                                   │ No
           ▼  ╱S12a                               ▼  ╱S12b
   ┌──────────────────┐                   ┌──────────────────┐
   │ Beacon Transmission│                 │ Beacon Transmission│
   └──────────────────┘                   └──────────────────┘
           │                                      │
           ▼  ╱S13a                               ▼  ╱S13b
      ╱  Power Received ╲                    ╱  Power Received ╲
  No ╲ Apparatus Detected? ╱            No  ╲ Apparatus Detected? ╱
           │ Yes                               │ Yes
           ▼  ╱S14a                            ▼  ╱S14b
   ┌──────────────────┐                   ┌──────────────────┐
   │ Establish Wireless│                  │ Establish Wireless│
   │Communication Connection│             │Communication Connection│
   └──────────────────┘                   └──────────────────┘
           │  ╱S15a                             │  ╱S15b
   ┌──────────────────┐                   ┌──────────────────┐
   │ Start Supplying Power│               │ Start Supplying Power│
   └──────────────────┘                   └──────────────────┘
           │  ╱S16a                             │  ╱S16b
   ┌──────────────────┐                   ┌──────────────────┐
   │ Acquire Received Power│              │ Acquire Received Power│
   └──────────────────┘                   └──────────────────┘
           │  ╱S17a                             │  ╱S17b
   ┌──────────────────┐                   ┌──────────────────┐
   │ Acquire Power Supply│                │ Acquire Power Supply│
   │   Efficiency A     │                 │   Efficiency B     │
   └──────────────────┘                   └──────────────────┘
           │  ╱S18a                             │  ╱S18b
   ┌──────────────────┐                   ┌──────────────────┐
   │Power Supply Efficiency A│            │Power Supply Efficiency B│
   │   Notification     │                 │   Notification     │
   └──────────────────┘                   └──────────────────┘
           │  ╱S19a                             │  ╱S19b
   ┌──────────────────┐                   ┌──────────────────┐
   │ Stop Supplying Power│                │ Stop Supplying Power│
   └──────────────────┘                   └──────────────────┘
           │                                      │
           ▼                                      ▼
         ( 1 )                                  ( 2 )
```

FIG. 7

Power Supply Apparatus 1a

(1)

S20a
Power Supply Efficiency B
Received from the Other Power
Supply Apparatus? — Yes

No

S24a
Has Predetermined
Amount of Time
Elapsed?

No

Yes

S21a
Power Supply Efficiency A >
Power Supply Efficiency B?

Yes

No

S22a
Power Supply Efficiency A
Notification

S23a
Resume Power Supply

Stop

After Power Supply Apparatus 1b is Activated

(2)

S20b
Power Supply Efficiency A
Received from the Other Power
Supply Apparatus? — Yes

No

S24b
Has Predetermined
Amount of Time
Elapsed?

No

Yes

S21b
Power Supply Efficiency B >
Power Supply Efficiency A?

Yes

No

S22b
Power Supply Efficiency B
Notification

S23b
Resume Power Supply

Stop

FIG. 8

FIG. 9

Power Supply Apparatus 101a
During Power Supply

Power Supply Apparatus 101b

```
        ( Start )

         S101a
    Did Power Supply
No   Efficiency Decrease?

         Yes
              S102a
    Acquire Power Supply
        Efficiency A
              S103a
    Stop Supplying Power



              ( 1 )
```

```
        ( Start )

                    S11b
        Is Power Supply
No   Detected by Other Power
        Supply Apparatus?

              Yes
                    S12b
    Beacon Transmission

                    S13b
        Power Received
No   Apparatus Detected?

              Yes
                    S14b
        Establish Wireless
    Communication Connection
                    S15b
    Start Supplying Power
                    S16b
    Acquire Received Power
                    S17b
    Acquire Power Supply
        Efficiency B
                    S18b
    Power Supply Efficiency B
        Notification
                    S19b
    Stop Supplying Power



              ( 2 )
```

FIG. 10

FIG. 11

Power Supply Apparatus 201a
During Power Supply

Power Supply Apparatus 201b

```
        ( Start )

         ┌──────┐
         ↓      │
      ╱ Has Predetermined ╲  ⌐S201a
   No ╲ Amount of Time Elapsed? ╱
         │
        Yes
         ↓        ⌐S202a
   ┌─────────────────┐
   │ Acquire Power Supply │
   │   Efficiency A    │
   └─────────────────┘  ⌐S203a
   ┌─────────────────┐
   │ Stop Supplying Power │
   └─────────────────┘

         ( 1 )
```

```
        ( Start )

         ┌──────┐
         ↓      │
      ╱ Is Power Supply ╲  ⌐S11b
   No ╲ Detected by Other Power ╱
      ╲ Supply Apparatus? ╱
         │
        Yes  ⌐S12b
   ┌─────────────────┐
   │ Beacon Transmission │
   └─────────────────┘
         ┌──────┐
         ↓      │
      ╱ Power Received ╲  ⌐S13b
   No ╲ Apparatus Detected? ╱
         │
        Yes  ⌐S14b
   ┌─────────────────────┐
   │ Establish Wireless   │
   │ Communication Connection │
   └─────────────────────┘  ⌐S15b
   ┌─────────────────┐
   │ Start Supplying Power │
   └─────────────────┘  ⌐S16b
   ┌─────────────────┐
   │ Acquire Received Power │
   └─────────────────┘  ⌐S17b
   ┌─────────────────┐
   │ Acquire Power Supply │
   │   Efficiency B    │
   └─────────────────┘  ⌐S18b
   ┌─────────────────┐
   │ Power Supply Efficiency B │
   │   Notification    │
   └─────────────────┘  ⌐S19b
   ┌─────────────────┐
   │ Stop Supplying Power │
   └─────────────────┘

         ( 2 )
```

FIG. 12

Power Supply Apparatus 301a
During Power Supply

Power Supply Apparatus 301b

```
        ┌─────────────┐
        │    Start    │
        └─────────────┘
               │
               ▼                    S301a
         ╱─────────────────────╲
    No  ╱  Power Supply Efficiency A ╲
  ◄────╱   ≤ Predetermined Threshold? ╲
        ╲─────────────────────╱
               │ Yes
               ▼              S302a
       ┌──────────────────┐
       │ Acquire Power Supply │
       │    Efficiency A      │
       └──────────────────┘
               │              S303a
       ┌──────────────────┐
       │ Stop Supplying Power │
       └──────────────────┘
               │
               ▼
              ( 1 )
```

```
        ┌─────────────┐
        │    Start    │
        └─────────────┘
               │
               ▼                    S11b
         ╱─────────────────────╲
    No  ╱    Is Power Supply     ╲
  ◄────╱  Detected by Other Power ╲
        ╲    Supply Apparatus?    ╱
         ╲─────────────────────╱
               │ Yes
               ▼              S12b
       ┌──────────────────┐
       │ Beacon Transmission │
       └──────────────────┘
               │
               ▼                    S13b
         ╱─────────────────────╲
    No  ╱    Power Received      ╲
  ◄────╱   Apparatus Detected?    ╲
        ╲─────────────────────╱
               │ Yes
               ▼              S14b
       ┌──────────────────┐
       │  Establish Wireless  │
       │ Communication Connection │
       └──────────────────┘
               │              S15b
       ┌──────────────────┐
       │ Start Supplying Power │
       └──────────────────┘
               │              S16b
       ┌──────────────────┐
       │ Acquire Received Power │
       └──────────────────┘
               │              S17b
       ┌──────────────────┐
       │ Acquire Power Supply │
       │    Efficiency B      │
       └──────────────────┘
               │              S18b
       ┌──────────────────┐
       │ Power Supply Efficiency B │
       │    Notification      │
       └──────────────────┘
               │              S19b
       ┌──────────────────┐
       │ Stop Supplying Power │
       └──────────────────┘
               │
               ▼
              ( 2 )
```

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/261998 A1 (SATO KAZUHIRO [JP]) 18 October 2012 (2012-10-18) | 1-14 | INV. H02J7/02 H02J50/10 H02J50/40 H02J50/80 |
| A | * paragraph [0037] - paragraph [0101]; figures 1-6 * | 15 | |
| X | US 2012/319644 A1 (HU CHIH-KUEI [TW] ET AL) 20 December 2012 (2012-12-20) | 1-4,6-14 | |
| A | * paragraph [0024] - paragraph [0025]; figures 2-4 * | 15 | |

**TECHNICAL FIELDS SEARCHED (IPC)**

H02J
B60L

The present search report has been drawn up for all claims

| Place of search | Date of completion of the search | Examiner |
|---|---|---|
| Munich | 4 November 2016 | Telega, Pawel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 8894

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2016

| Patent document cited in search report | Publication date | Patent family member(s) | Publication date |
|---|---|---|---|
| US 2012261998 A1 | 18-10-2012 | CN 102738858 A<br>EP 2512001 A2<br>JP 2012223070 A<br>KR 20120117648 A<br>TW 201304348 A<br>US 2012261998 A1 | 17-10-2012<br>17-10-2012<br>12-11-2012<br>24-10-2012<br>16-01-2013<br>18-10-2012 |
| US 2012319644 A1 | 20-12-2012 | NONE | |

EPO FORM P0459

For more details about this annex : see Official Journal of the European Patent Office, No. 12/82

**EP 3 116 094 A1**

**Patent documents cited in the description**

- JP 2012029471 A